# EUROPEAN PATENT SPECIFICATION

(11) **EP 3 332 906 B1**
(45) Date of publication and mention of the grant of the patent: **20.03.2019**
(21) Application number: 17205401.7
(22) Date of filing: 05.12.2017
(51) Int. Cl.: B23Q 7/04, B23Q 7/10, B26D 7/06, A61C 13/00, B26F 1/38, B26D 7/02, B25J 15/00, B23Q 7/14

(54) **PROCESSING TARGET CONVEYING DEVICE AND CUTTING SYSTEM**
BEARBEITUNGSZIELFÖRDERVORRICHTUNG UND SCHNEIDSYSTEM
DISPOSITIF DE MAINTIEN DE CIBLE DE TRAITEMENT ET DISPOSITIF DE COUPE

(30) Priority: 07.12.2016 JP 2016237644
(43) Date of publication of application: 13.06.2018
(73) Proprietor: Roland DG Corporation, Shizuoka 431-2103 (JP)
(72) Inventor: HAYASAKA, Keiichi, Hamamatsu-shi, Shizuoka 431-2103 (JP); HANAJIMA, Shingo, Hamamatsu-shi, Shizuoka 431-2103 (JP); SUYAMA, Akihiro, Hamamatsu-shi, Shizuoka 431-2103 (JP)
(74) Representative: Grünecker Patent- und Rechtsanwälte PartG mbB

(56) References cited:
- EP-A1- 0 351 431
- EP-A1- 1 982 799
- EP-A2- 0 800 893
- EP-A2- 2 581 747
- DE-A1-102009 011 672

## Description

### BACKGROUND OF THE INVENTION

### Field of the Invention

The present invention relates to a processing target conveying device that conveys a processing target, which is a cutting target, and a cutting system including the processing target conveying device.

### Description of the Related Art

Conventionally, a cutting device that cuts a processing target formed of a ceramic material, a resin material or the like into a desired shape is known. The processing target is formed in a disc form, for example. In a cutting device of this type, as disclosed in Japanese Patent Application Publication No. 2015-120222, for example, an arc-shaped portion of a disc-shaped processing target is cut by a processing tool in a state in which the arc-shaped portion is held by an approximately C-shaped holding member.

However, in the cutting device disclosed in Japanese Patent Application Publication No. 2015-120222, when cutting processing is performed with respect to a plurality of processing targets, it is necessary to secure a space for accommodating the plurality of processing targets in a portion other than the cutting device. Moreover, a user needs to take out processing targets from the space in which the plurality of processing targets are accommodated one by one with his or her hands and attach the processing target to a holding member. EP-0351431A1 discloses a processing device comprising:a stocker for a plurality of processing targets; a conveying unit movable in a three-dimensional direction relative to the stocker; wherein an adapter is configured to be attached to the processing target, and the conveying unit includes:a conveying unit body; a first hook, a second hook facing the first hook, a spring configured to apply elastic force to the first hook so that the distal end of the first hook moves toward the second hook.

### SUMMARY OF THE INVENTION

With the foregoing in view, an object of the present invention is to provide a processing target conveying device and a cutting system capable of accommodating a plurality of processing targets and alleviating user's burden.

A processing target conveying device according to the present invention includes a stocker, a conveying unit, a moving mechanism, and a controller. The stocker is configured to accommodate a plurality of processing targets. The conveying unit is configured to take out one of the processing targets, which are accommodated in the stocker from the stocker. The moving mechanism is configured to move the conveying unit in a three-dimensional direction relative to the stocker. The controller is configured to control the moving mechanism. An adapter having a first engagement projection formed at one end in a first direction and a second engagement projection formed at the other end on a side opposite to the one end is configured to be attached to the processing target. The conveying unit includes a conveying unit body, a first hook, a second hook, a first spring, and a second spring. The first hook extends in a second direction orthogonal to the first direction from the conveying unit body and a first engagement recess configured to engage with the first engagement projection is formed at a distal end thereof. The second hook at a position facing the first hook in the first direction extends in the second direction from the conveying unit body and a second engagement recess configured to engage with the second engagement projection is formed at a distal end thereof. The first spring is configured to apply elastic force to the first hook so that the distal end of the first hook moves toward the second hook when the first engagement projection is positioned in the first engagement recess. The second spring is configured to apply elastic force to the second hook so that the distal end of the second hook moves toward the first hook when the second engagement projection is positioned in the second engagement recess.

According to the processing target conveying device of the present invention, it is possible to accommodate a plurality of processing targets in the stocker. When the processing target accommodated in the stocker is taken out, first, the controller controls the moving mechanism so that the conveying unit moves toward the processing target accommodated in the stocker. Moreover, when the conveying unit is moved so that the processing target is positioned between the first and second hooks of the conveying unit, the first engagement projection of the adapter attached to the processing target engages with the first engagement recess of the first hook and the second engagement projection of the adapter engages with the second engagement recess of the second hook. In this case, the distal end of the first hook moves toward the second hook by the elastic force of the first spring. The distal end of the second hook moves toward the first hook by the elastic force of the second spring. Therefore, the conveying unit can grasp the processing target using the elastic force of the first and second springs. Moreover, the conveying unit moves in a state of grasping the processing target. In this way, it is possible to take out the processing target from the stocker. Therefore, it is possible to automatically take out the processing target from the stocker using the processing target conveying device. As a result, it is possible to alleviate user's burden.

According to the present invention, it is possible to provide a processing target conveying device capable of accommodating a plurality of processing targets and alleviating user's burden.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective view of a cutting system according to a first embodiment;
FIG. 2 is a plan view of a processing target to which an adapter is attached;
FIG. 3 is a perspective view of the cutting system and is a diagram illustrating a state in which a lid of a conveying device is open;
FIG. 4 is a plan view of the conveying device and is a conceptual diagram illustrating a state in which the lid is closed;
FIG. 5 is a plan view of the conveying device and is a conceptual diagram illustrating a state in which the lid is open;
FIG. 6 is a plan view of a conveying unit and is a diagram illustrating a state in which a processing target is grasped by a conveying unit;
FIG. 7 is a plan view of the conveying unit and is a diagram illustrating a state in which the processing target is not grasped by the conveying unit;
FIG. 8 is a plan view of the conveying unit and is a diagram illustrating a state in which the processing target is not grasped by the conveying unit;
FIG. 9 is a plan view illustrating a state in which a first contact member is in contact with a first hook and a second contact member is in contact with a second hook at a standby position;
FIG. 10 is a block diagram of the conveying device;
FIG. 11 is a front view of a cutting device;
FIG. 12 is a perspective view of a tool magazine;
FIG. 13 is a perspective view of a rotation supporting member and a clamp;
FIG. 14 is a plan view of the conveying unit and is a diagram illustrating a state in which the processing target is not grasped by the conveying unit;
FIG. 15 is a plan view of the conveying unit and is a diagram illustrating a state in which the processing target is not grasped by the conveying unit;
FIG. 16 is a plan view of the conveying unit and is a diagram illustrating a state in which the grasping state of the processing target grasped by the conveying unit is released;
FIG. 17 is a plan view of a conveying unit according to a second embodiment and is a diagram illustrating a state in which the processing target is grasped by the conveying unit; and
FIG. 18 is a plan view of the conveying unit according to the second embodiment and is a diagram illustrating a state in which the processing target is not grasped by the conveying unit.

### DETAILED DESCRIPTION OF THE PREFERRED EMBODIMENTS

Hereinafter, a cutting system having a processing target conveying device according to an embodiment of the present invention will be described with reference to the drawings. Naturally, embodiments described herein are not intended to limit the present invention particularly. Moreover, members and portions which provide the same effects are denoted by the same symbols, and redundant description will be appropriately omitted or simplified.

### First Embodiment

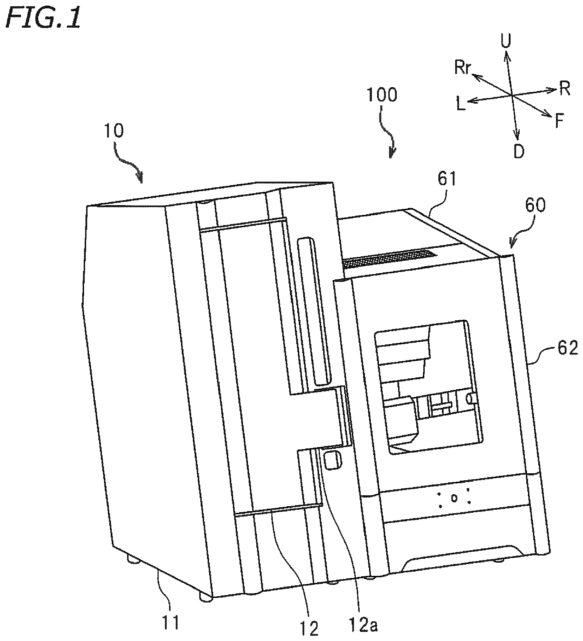

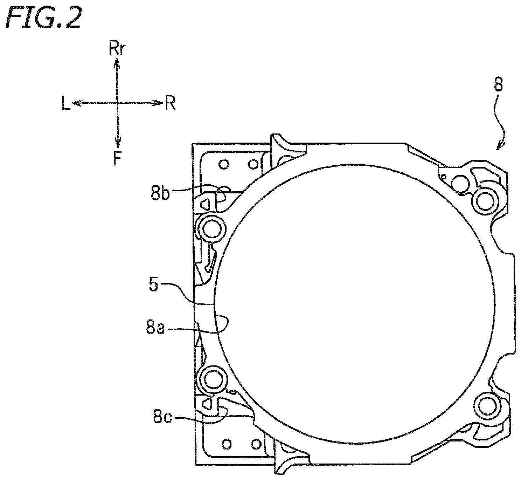

FIG. 1 is a perspective view of a cutting system 100 according to a first embodiment. FIG. 2 is a plan view of a processing target 5 to which an adapter 8 is attached. In the following description, when a user being in front of the cutting system 100 faces the cutting system 100, a side on which the user moves away from the cutting system 100 is defined as a front side, and a side on which the user moves toward the cutting system 100 is defined as a rear side. Left, Right, Up, and Down mean the directions left, right, up, and down, respectively, when the user being in front of the cutting system 100 faces the cutting system 100. Moreover, the symbols F, Rr, L, R, U, and D in the drawings mean front, rear, left, right, up, and down, respectively. In the present embodiment, when orthogonal axes X, Y, and Z are defined, the cutting system 100 is disposed on a plane formed by the X and Y-axes. Here, the X-axis is an axis extending in a front-rear direction. The Y-axis is an axis extending in a left-right direction. The Z-axis is an axis extending in an up-down direction. Moreover, symbols θx, θy, and θz indicate rotation directions around X, Y, and Z-axes, respectively. However, the above-described directions are defined for the sake of convenience only. The above-described directions do not limit an installation aspect of the cutting system 100 and do not limit the present invention. In the present embodiment, the front-rear direction corresponds to a "first direction" of the present invention. The left-right direction corresponds to a "second direction" of the present invention.

In the cutting system 100 according to the present embodiment, a plurality of processing targets 5 (see FIG. 2) are accommodated. One processing target 5 among the plurality of accommodated processing targets 5 is selected. Cutting processing is performed with respect to the selected processing target 5. For example, the cutting system 100 cuts the processing target 5 to produce an artificial tooth. In the present embodiment, as illustrated in FIG. 2, the processing target 5 has a disc shape. The processing target 5 is formed of various materials such as zirconia, wax, polymethyl methacrylate resin (PMMA), hybrid resin, polyether ether ketone (PEEK) resin, or gypsum. When zirconia is used as a material of the processing target 5, half-sintered zirconia is used, for example. However, the shape and the material of the processing target 5 are not particularly limited.

In the present embodiment, an adapter 8 is attached to the processing target 5. In a state in which the adapter 8 is attached thereto, the processing target 5 is accommodated in the cutting system 100 and is subjected to cutting processing. In this example, an insertion hole 8a is formed in a central portion of the adapter 8. The processing target 5 is inserted into this insertion hole 8a whereby the processing target 5 is attached to the adapter 8. In the following description, the processing target 5 refers to the processing target 5 to which the adapter 8 is attached. The processing target 5 includes the adapter 8 attached to the processing target 5 in addition to the processing target 5.

In the present embodiment, as illustrated in FIG. 1, the cutting system 100 includes a processing target conveying device 10 (hereinafter referred to as a conveying device 10) and a cutting device 60. Hereinafter, the conveying device 10 and the cutting device 60 will be described.

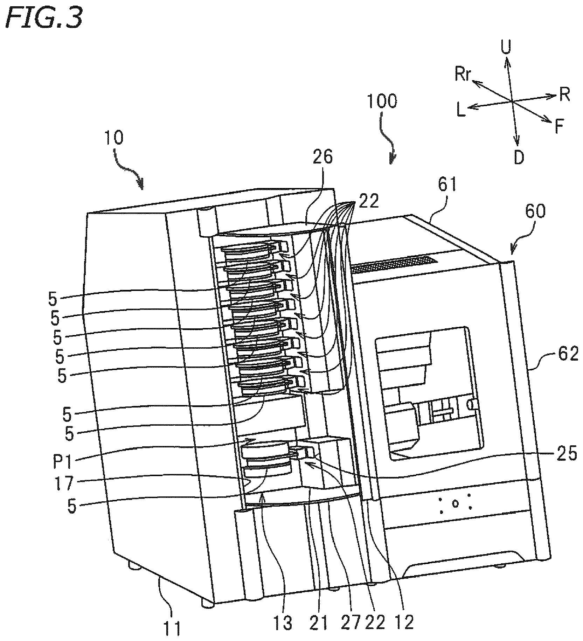

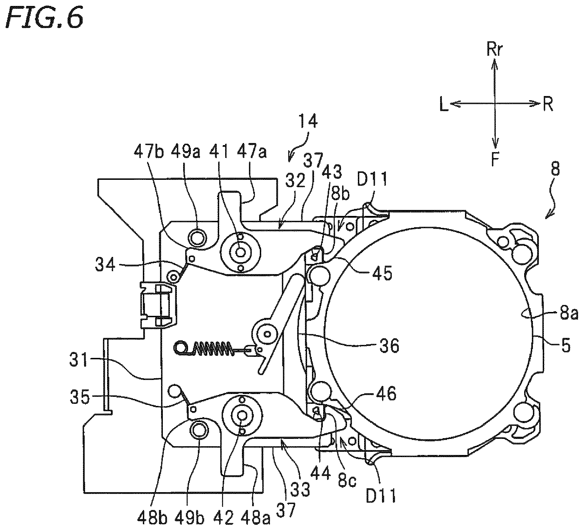

FIG. 3 is a perspective view of the cutting system 100. FIG. 3 is a diagram illustrating a state in which a lid 12 (to be described later) of the conveying device 10 is open. In the present embodiment, as illustrated in FIG. 3, a plurality of processing targets 5 are accommodated in the conveying device 10. The conveying device 10 selects one processing target 5 among the plurality of accommodated processing targets 5. Moreover, the conveying device 10 conveys the selected processing target 5 to the cutting device 60. The conveying device 10 is formed in a box form. In this example, the conveying device 10 includes a conveying case body 11, a lid 12, a stocker 13, and a conveying unit 14 (see FIG. 6).

The conveying case body 11 is formed in a box form. The conveying case body 11 has an inner space. The inner space of the conveying case body 11 is a space for accommodating the stocker 13 in which the plurality of processing targets 5 are accommodated. Moreover, an opening 17 is formed in a front portion of the conveying case body 11. In the present embodiment, the conveying case body 11 corresponds to a "main body" of the present invention.

The lid 12 is provided in the conveying case body 11 so as to be able to open and close the opening 17 in the front portion of the conveying case body 11. In the present embodiment, the lid 12 is supported by the conveying case body 11 so as to be rotatable about a right end thereof. In this example, the lid 12 is a planar member extending in the up-down direction. As illustrated in FIG. 1, a supporting projection 12a is provided in the lid 12 so as to extend toward the right side from a right portion of the lid 12. The supporting projection 12a is supported by the conveying case body 11. In this example, the lid 12 rotates about the supporting projection 12a to open and close the opening 17 of the conveying case body 11 as illustrated in FIG. 3. When the opening 17 is open by the lid 12, a state in which the inner space of the conveying case body 11 communicates with the outside is created. A lock mechanism for locking movement of the lid 12 relative to the conveying case body 11 when the lid 12 opens the opening 17 may be provided in the lid 12.

A plurality of processing targets 5 are accommodated in the stocker 13. In the present embodiment, the stocker 13 is provided in the lid 12. In the following description, the front, rear, left, and right sides of the stocker 13 mean the front, rear, left, and right sides when a user being in front of the conveying device 10 faces the conveying device 10 in a state in which the lid 12 closes the opening 17 of the conveying case body 11. In the present embodiment, the stocker 13 includes a stocker body 21 and a plurality of accommodation portions 22. The stocker body 21 is a box-shaped member extending in the up-down direction. The stocker body 21 has an inner space. An opening 25 is formed in a left portion of the stocker body 21.

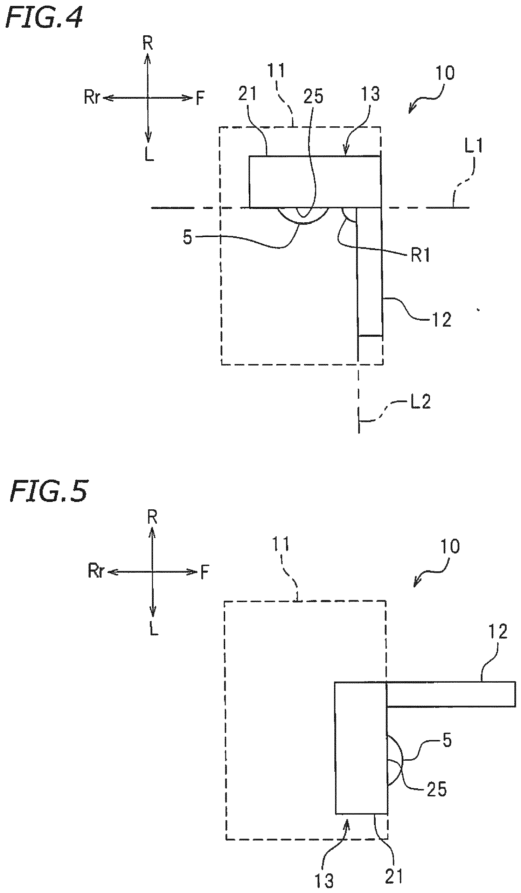

FIG. 4 is a plan view of the conveying device 10. FIG. 4 is a conceptual diagram illustrating a state in which the lid 12 is closed. FIG. 5 is a plan view of the conveying device 10. FIG. 5 is a conceptual diagram illustrating a state in which the lid 12 is open. As illustrated in FIG. 4, a front end of the stocker body 21 is connected to a right end of the lid 12. As illustrated in FIG. 3, an upper end of the stocker body 21 and an upper end of the lid 12 are connected by an upper connecting plate 26 which is an example of a connecting member. The upper connecting plate 26 connects the stocker body 21 and the lid 12. A lower end of the stocker body 21 and a lower end of the lid 12 are connected by a lower connecting plate 27. As illustrated in FIG. 4, in a plan view, an angle R1 between a surface (in this example, a left surface) of the stocker body 21 facing the lid 12 and a surface (in this example, a rear surface) of the lid 12 on the side of the conveying case body 11 is 90°. In other words, in a plan view, an angle R1 between a straight line L1 on an opening end of the stocker body 21 and a straight line L2 on the rear surface of the lid 12 is 90°, for example. In this example, the angle of 90° includes slight errors (for example, 85° to 95°) in addition to the exact 90°. However, in a plan view, a specific value of the angle R1 between the straight line L1 on the opening end of the stocker body 21 and the straight line L2 on the rear surface of the lid 12 is not particularly limited. In the present embodiment, when the lid 12 rotates about the supporting projection 12a (see FIG. 1), the stocker body 21 rotates with the lid 12. For example, as illustrated in FIG. 4, when the lid 12 closes the opening 17 (see FIG. 3) of the conveying case body 11, the opening 25 of the stocker body 21 is open to the left side. As illustrated in FIG. 5, when the lid 12 opens the opening 17, the opening 25 of the stocker body 21 is open to the front side. When the lid 12 is open, the stocker 13 moves forward. A portion of the processing target 5 accommodated in the stocker 13 protrudes forward more than the conveying case body 11.

As illustrated in FIG. 3, the processing target 5 to which the adapter 8 (see FIG. 2) is accommodated in each of the plurality of accommodation portions 22. The plurality of accommodation portions 22 are disposed in the inner space of the stocker body 21. The plurality of accommodation portions 22 are disposed to be aligned in the up-down direction. In this example, the accommodation portion 22 is a member having an inner space. The processing target 5 is accommodated in the inner space of the accommodation portion 22. For example, an inner circumferential surface that forms the inner space of the accommodation portion 22 has a shape corresponding to the shape of the processing target 5 to which the adapter 8 is attached. One processing target 5 is accommodated in one accommodation portion 22. In the present embodiment, nine accommodation portions 22 are disposed in the stocker body 21. Therefore, nine processing targets 5 can be accommodated in the stocker 13. However, the number of accommodation portions 22 is not particularly limited. Moreover, an arrangement position of the plurality of accommodation portions 22 is not particularly limited. For example, some of the plurality of accommodation portions 22 may be disposed to be aligned in the left-right direction.

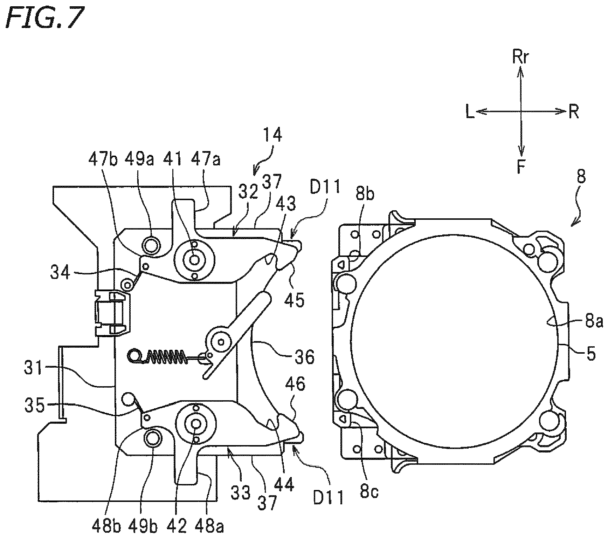

Next, the conveying unit 14 will be described. FIG. 6 is a plan view of the conveying unit 14. FIG. 6 is a diagram illustrating a state in which the processing target 5 is grasped by the conveying unit 14. FIG. 7 is a plan view of the conveying unit 14. FIG. 7 is a diagram illustrating a state in which the processing target 5 is not grasped by the conveying unit 14. As illustrated in FIG. 6, the conveying unit 14 is configured to take out the processing target 5 accommodated in the accommodation portion 22 of the stocker 13 from the stocker 13. The conveying unit 14 is configured to convey the taken-out processing target 5 to the cutting device 60. Moreover, the conveying unit 14 is configured to accommodate the processing target 5 in the accommodation portion 22 of the stocker 13. Although not illustrated in the drawings, the conveying unit 14 is disposed in the inner space of the conveying case body 11. In the present embodiment, the conveying unit 14 includes a conveying unit body 31, a first hook 32, a second hook 33, a first spring 34, a second spring 35, and a fixing member 36.

The conveying unit body 31 is a planar member. The first and second hooks 32 and 33 are members that sandwich the processing target 5 to which the adapter 8 is attached. The first and second hooks 32 and 33 may be disposed to face each other in the front-rear direction. In the present embodiment, the first hook 32 is provided on the upper surface of the conveying unit body 31. In this example, a first shaft 41 extending upward is provided on a rear portion of the upper surface of the conveying unit body 31. The first hook 32 is supported by the first shaft 41. The first hook 32 can rotate about the first shaft 41. The second hook 33 is provided on the upper surface of the conveying unit body 31 similarly to the first hook 32. In this example, a second shaft 42 extending upward is provided on a front portion of the upper surface of the conveying unit body 31. The second shaft 42 faces the first shaft 41 in the front-rear direction. The second hook 33 is supported by the second shaft 42. The second hook 33 can rotate about the second shaft 42.

In the present embodiment, a distal end of the first hook 32 and a distal end of the second hook 33 are a right portion of the first hook 32 and a right portion of the second hook 33, respectively. The distal end of the first hook 32 and the distal end of the second hook 33 refers to an end close to the side facing the processing target 5 accommodated in the stocker 13. As illustrated in FIG. 7, a first engagement recess 43 that engages with a portion of the adapter 8 attached to the processing target 5 is formed in the distal end of the first hook 32. The first engagement recess 43 is depressed backward from the surface of the first hook 32 close to the second hook 33. In this example, a first engagement projection 8b that protrudes backward is formed on a left portion of the rear surface of the adapter 8. The first engagement recess 43 of the first hook 32 engages with the first engagement projection 8b of the adapter 8. Moreover, in the present embodiment, a first inclined surface 45 is formed in a front surface of the first hook 32 at a distal end thereof, the first inclined surface 45 being formed closer to the distal end than the first engagement recess 43 and being inclined to a side opposite to the second hook 33 toward the distal end. Moreover, a first projection 47a is formed on a base end which is an end on a side opposite to the distal end of the first hook 32. In this example, the first projection 47a extends backward from the base end of the first hook 32. The first projection 47a extends in a direction opposite the second hook 33 from the base end of the first hook 32. Moreover, a first base end projection 47b is formed in the base end of the first hook 32 on a side closer to the base end than the first projection 47a. The first base end projection 47b is a projection extending in the left-right direction. In the following description, the base end of the first hook 32 includes the first base end projection 47b.

A second engagement recess 44 that engages with a portion of the adapter 8 attached to the processing target 5 is formed in the distal end of the second hook 33. The second engagement recess 44 faces the first engagement recess 43 of the first hook 32 in the front-rear direction. The second engagement recess 44 is depressed forward from a surface of the second hook 33 close to the first hook 32. In this example, a second engagement projection 8c that protrudes forward is formed on a left portion of the front surface of the adapter 8. The second engagement recess 44 of the second hook 33 engages with the second engagement projection 8c of the adapter 8. Moreover, in the present embodiment, a second inclined surface 46 is formed in a rear surface of the second hook 33 at a distal end thereof, the second inclined surface 46 being formed to closer to the distal end than the second engagement recess 44 and being inclined to a side opposite to the first hook 32 toward the distal end. The second inclined surface 46 faces the first inclined surface 45 of the first hook 32 in the front-rear direction. Moreover, a second projection 48a is formed on a base end which is an end on a side opposite to the distal end of the second hook 33. In this example, the second projection 48a extends forward from the base end of the second hook 33. The second projection 48a extends in a direction opposite the first hook 32 from the base end of the second hook 33. Moreover, a second base end projection 48b extending toward the left side is formed on the base end of the second hook 33 on a side closer to the base end than the second projection 48a. In the following description, the base end of the second hook 33 includes the second base end projection 48b.

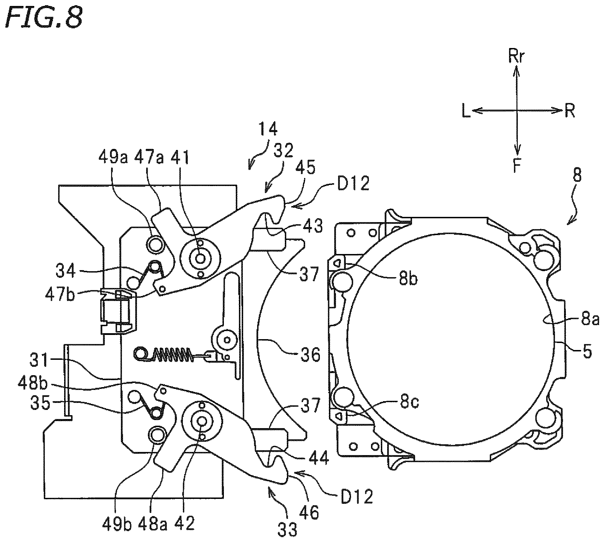

The first spring 34 is configured to apply elastic force to the first hook 32. In the present embodiment, the first spring 34 applies elastic force in such a direction that the distal end of the first hook 32 moves toward the second hook 33 when at least a portion of the first inclined surface 45 of the first hook 32 is positioned closer to the front side than the distal end (in this example, the rear end) of the first engagement projection 8b of the adapter 8. FIG. 8 is a plan view of the conveying unit 14 and is a diagram illustrating a state in which the processing target 5 is not grasped by the conveying unit 14. As illustrated in FIG. 8, the first spring 34 applies elastic force to the first hook 32 so that the distal end of the first hook 32 does not move when the first inclined surface 45 is positioned closer to the rear side than the first engagement projection 8b of the adapter 8. In FIG. 8, the distal end of the first hook 32 is not moved by the elastic force of the first spring 34. Moreover, as illustrated in FIG. 6, the first spring 34 applies elastic force in such a direction that the distal end of the first hook 32 moves toward the second hook 33 when the first engagement projection 8b of the adapter 8 is positioned in the first engagement recess 43 of the first hook 32. As illustrated in FIG. 8, the first spring 34 applies elastic force to the first hook 32 so that the distal end of the first hook 32 does not move when the first engagement projection 8b of the adapter 8 is not positioned in the first engagement recess 43. In the present embodiment, the first spring 34 is provided on the upper surface of the conveying unit body 31 on a side closer to the left side than the first shaft 41. The first spring 34 is connected to the first base end projection 47b of the first hook 32.

The second spring 35 is configured to apply elastic force to the second hook 33. In the present embodiment, as illustrated in FIG. 7, the second spring 35 applies elastic force in such a direction that the distal end of the second hook 33 moves toward the first hook 32 (that is, toward the rear side) when at least a portion of the second inclined surface 46 of the second hook 33 is positioned closer to the rear side than the distal end (in this example, the front end) of the second engagement projection 8c of the adapter 8. As illustrated in FIG. 8, the second spring 35 applies elastic force to the second hook 33 so that the distal end of the second hook 33 does not move when the second inclined surface 46 is positioned closer to the front side than the second engagement projection 8c. In FIG. 8, the distal end of the second hook 33 is not moved by the elastic force of the second spring 35. Moreover, as illustrated in FIG. 7, the second spring 35 applies elastic force in such a direction that the distal end of the second hook 33 moves toward the first hook 32 when the second engagement projection 8c of the adapter 8 is positioned in the second engagement recess 44 of the second hook 33. As illustrated in FIG. 8, the second spring 35 applies elastic force to the second hook 33 so that the distal end of the second hook 33 does not move when the second engagement projection 8c of the adapter 8 is not positioned in the second engagement recess 44. In the present embodiment, the second spring 35 is provided on the upper surface of the conveying unit body 31 on a side closer to the left side than the second shaft 42. The second spring 35 is connected to the second base end projection 48b of the second hook 33.

In the following description, as illustrated in FIG. 6, the orientation of the distal end of the first hook 32 and the orientation of the distal end of the second hook 33 when at least a portion of the first inclined surface 45 of the first hook 32 is positioned closer to the front side than the distal end of the first engagement projection 8b of the adapter 8 and at least a portion of the second inclined surface 46 of the second hook 33 is positioned closer to the rear side than the distal end of the second engagement projection 8c of the adapter 8 are referred to as a grasping orientation D11. The grasping orientation D11 is the orientation of the distal end of the first hook 32 when the first engagement recess 43 of the first hook 32 engages with the first engagement projection 8b. The grasping orientation D11 is the orientation of the distal end of the second hook 33 when the second engagement recess 44 of the second hook 33 engages with the second engagement projection 8c. The grasping orientation D11 is an orientation in which the first and second hooks 32 and 33 can grasp the processing target 5. On the other hand, as illustrated in FIG. 8, the orientation of the distal end of the first hook 32 and the orientation of the distal end of the second hook 33 when the first inclined surface 45 of the first hook 32 is positioned closer to the rear side than the first engagement projection 8b of the adapter 8 and the second inclined surface 46 of the second hook 33 is positioned closer to the front side than the second engagement projection 8c are referred to as a non-grasping orientation D12. The non-grasping orientation D12 is the orientation of the distal end of the first hook 32 when the first engagement recess 43 of the first hook 32 does not engage with the first engagement projection 8b. The non-grasping orientation D12 is the orientation of the distal end of the second hook 33 when the second engagement recess 44 of the second hook 33 does not engage with the second engagement projection 8c. The non-grasping orientation D12 is the orientation of the first and second hooks 32 and 33 when the processing target 5 is not grasped by the first and second hooks 32 and 33.

In the present embodiment, a first contact projection 49a and a second contact projection 49b are provided on the upper surface of the conveying unit body 31 so as to extend upward. The first contact projection 49a is provided, in the conveying unit body 31, in a portion located closer to the side opposite to the second hook 33 than the first shaft 41. In this example, the first contact projection 49a is provided closer to the left side than the first shaft 41. As illustrated in FIG. 8, the first projection 47a of the first hook 32 comes into contact with the first contact projection 49a when the orientation of the distal end of the first hook 32 is the non-grasping orientation D12. As illustrated in FIG. 6, a surface of the other end (in this example, the first base end projection 47b) of the first hook 32 on a side opposite to the second hook 33 does not make contact with the first contact projection 49a when the orientation of the distal end of the first hook 32 is the grasping orientation D11. Although not illustrated in the drawings, in the present embodiment, a surface of the other end of the first hook 32 on a side opposite to the second hook 33 comes into contact with the first contact projection 49a when the orientation of the distal end of the first hook 32 is moved toward the second hook 33 more than the grasping orientation D11. Therefore, the first contact projection 49a performs a role of restricting the orientation of the distal end of the first hook 32 from excessively entering toward the second hook 33 more than the grasping orientation D11.

The second contact projection 49b is provided, in the conveying unit body 31, in a portion located closer to the side opposite to the first hook 32 than the second shaft 42. In this example, the second contact projection 49b is provided closer to the left side than the second shaft 42. As illustrated in FIG. 8, the second projection 48a of the second hook 33 comes into contact with the second contact projection 49b when the orientation of the distal end of the second hook 33 is the non-grasping orientation D12. As illustrated in FIG. 6, a surface of the base end (in this example, the second base end projection 48b) of the second hook 33 on a side opposite to the first hook 32 does not make contact with the second contact projection 49b when the orientation of the distal end of the second hook 33 is the grasping orientation D11. Although not illustrated in the drawings, a surface of the other end of the second hook 33 on a side opposite to the first hook 32 comes into contact with the second contact projection 49b when the orientation of the distal end of the second hook 33 is moved toward the first hook 32 more than the grasping orientation D11. Therefore, the second contact projection 49b performs a role of restricting the orientation of the distal end of the second hook 33 from excessively entering toward the first hook 32 more than the grasping orientation D11.

The fixing member 36 is a member for suppressing falling of the processing target 5 when the processing target 5 is grasped by the first hook 32 and the second hook 33 of the conveying unit 14. In the present embodiment, the fixing member 36 extends toward the right side from the lower surface of the conveying unit body 31. The fixing member 36 is disposed below the first and second hooks 32 and 33. At least a portion of the fixing member 36 is disposed between the first and second hooks 32 and 33 in a plan view. As illustrated in FIG. 6, in a state in which the processing target 5 is grasped by the first and second hooks 32 and 33, a portion of the adapter 8 attached to the processing target 5 is positioned on the fixing member 36. In this example, the fixing member 36 is a metal plate formed of metal. However, a material for forming the fixing member 36 is not particularly limited. In the present embodiment, a plate spring 37 is provided in a right portion of the conveying unit body 31. The plate spring 37 applies elastic force toward the processing target 5 when the processing target 5 is disposed on the upper surface of the fixing member 36. In this example, the processing target 5 to which the adapter 8 is attached is sandwiched by the plate spring 37 in a state of being disposed on the upper surface of the fixing member 36 whereby the processing target 5 is fixed to the conveying unit 14.

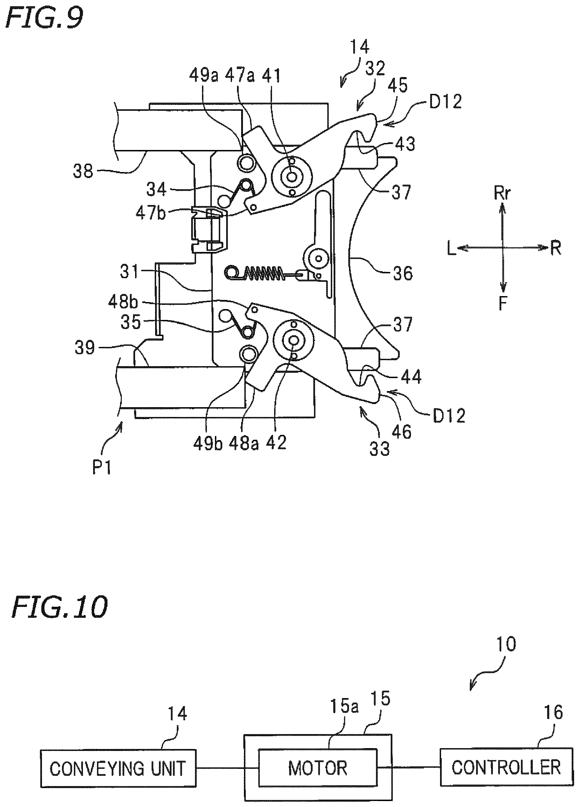

In the present embodiment, as illustrated in FIG. 3, the conveying unit 14 is configured to stand by at a standby position P1 when the conveying unit 14 does not convey the processing target 5. A specific position of the standby position P1 is not particularly limited. In this example, the standby position P1 is a lower portion of the inner space of the conveying case body 11 and is between the accommodation portion 22 positioned the second place from the bottom among the plurality of accommodation portions 22 and the accommodation portion 22 positioned at the bottom. FIG. 9 is a plan view illustrating a state in which the first contact member 38 is in contact with the first hook 32 and the second contact member 39 is in contact with the second hook 33 at the standby position P1. In this example, as illustrated in FIG. 9, the first contact member 38 that can make contact with the first projection 47a of the first hook 32 and the second contact member 39 that can make contact with the second projection 48a of the second hook 33 are provided at the standby position P1. The first contact member 38 is a member that comes into contact with the first projection 47a of the first hook 32 from the left side when the orientation of the distal end of the first hook 32 is the non-grasping orientation D12 to change the orientation of the first hook 32 to the grasping orientation D11. The second contact member 39 is a member that comes into contact with the second projection 48a of the second hook 33 from the left side when the orientation of the distal end of the second hook 33 is the non-grasping orientation D12 to change the orientation of the second hook 33 to the grasping orientation D11. In this example, the first and second contact members 38 and 39 are provided so as to protrude inward from an inner circumferential surface that forms the inner space of the conveying case body 11. A material of the first and second contact members 38 and 39 is not particularly limited. In this example, the first and second contact members 38 and 39 are metal plates.

FIG. 10 is a block diagram illustrating the conveying device 10. In the present embodiment, as illustrated in FIG. 10, the conveying device 10 includes a moving mechanism 15 that moves the conveying unit 14 in a three-dimensional direction relative to the stocker 13 (see FIG. 3). A specific configuration of the moving mechanism 15 is not particularly limited. In this example, the moving mechanism 15 moves the conveying unit 14 in a three-dimensional direction so that the conveying unit 14 is moved in a three-dimensional direction relative to the stocker 13. For example, the moving mechanism 15 includes a first guide rail (not illustrated) extending in the front-rear direction, a second guide rail (not illustrated) that extends in the left-right direction to guide movement of the conveying unit 14 in a direction toward the accommodation portion 22, a third guide rail (not illustrated) extending in the up-down direction, and a motor 15a connected to the conveying unit body 31 of the conveying unit 14. When the motor 15a is driven, the conveying unit 14 moves in the front-rear direction along the first guide rail, moves in the left-right direction along the second guide rail, and moves in the up-down direction along the third guide rail.

In the present embodiment, the conveying device 10 includes a controller 16. The controller 16 is a device that controls conveying of the processing target 5. The controller 16 is configured as a microcomputer. The controller 16 is provided inside the conveying case body 11. The controller 16 includes a central processing unit (CPU), a ROM that stores programs to be executed by the CPU, a ROM, and the like. In this example, control related to conveying of the processing target 5 is performed using the programs stored in the microcomputer.

The controller 16 is electrically connected to the motor 15a of the moving mechanism 15. The controller 16 controls driving of the motor 15a. In this example, the controller 16 controls driving of the motor 15a to control movement of the conveying unit 14 in the three-dimensional direction.

Next, the cutting device 60 will be described. In this example, as illustrated in FIG. 1, the cutting device 60 cuts the processing target 5 conveyed from the conveying device 10. For example, the cutting device 60 is formed in a box form. A portion of the cutting device 60 communicates with the conveying device 10. The cutting device 60 includes a cutting case body 61 and a cover 62. The cutting case body 61 is formed in a box form. The cutting case body 61 has an inner space. A front portion of the cutting case body 61 is open. The cover 62 is supported by the cutting case body 61 so as to be able to open and close the opening of the cutting case body 61.

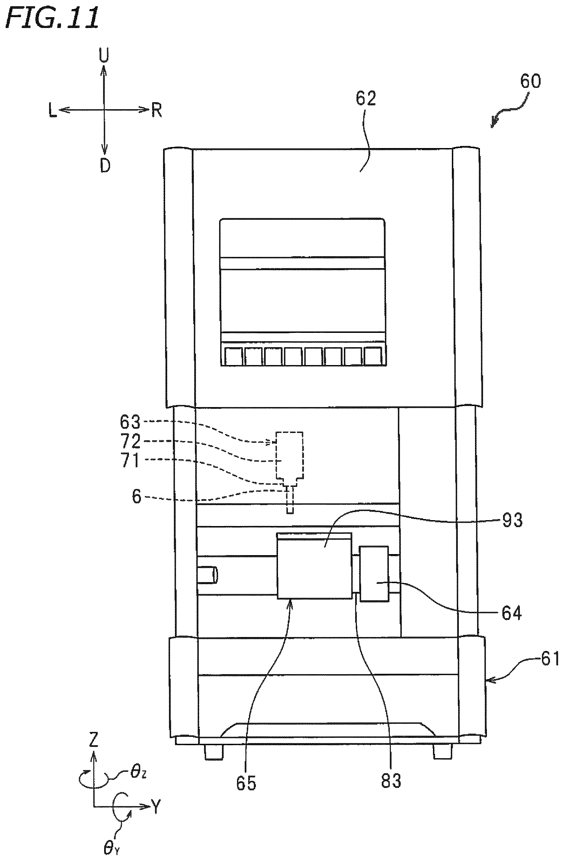

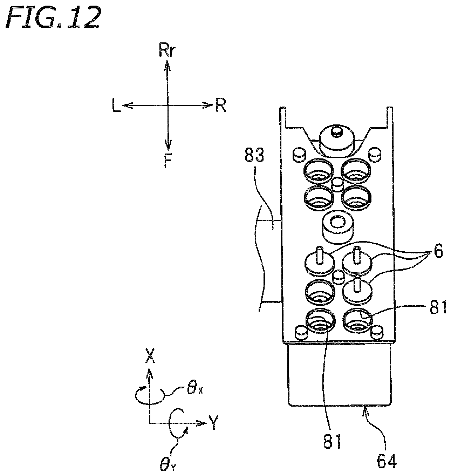

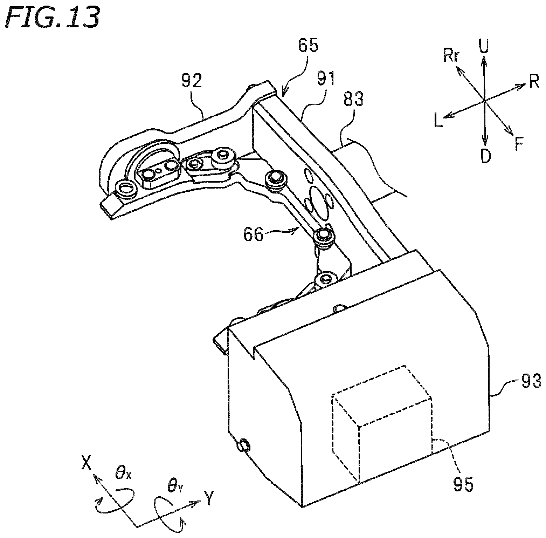

FIG. 11 is a front view of the cutting device 60. FIG. 11 illustrates an open state of the cover 62. Moreover, the conveying device 10 is omitted in FIG. 11. FIG. 12 is a perspective view of the tool magazine 64. FIG. 13 is a perspective view of a rotation supporting member 65 and a clamp 66. For example, as illustrated in FIG. 11, the cutting device 60 includes a spindle 63, a tool magazine 64, a rotation supporting member 65 (see FIG. 13), and a clamp 66 (see FIG. 13).

The spindle 63 is an example of a "cutting portion" of the present invention. The spindle 63 is configured to rotate the processing tool 6 to cut the processing target 5. The spindle 63 includes a grasping portion 71 and a rotating portion 72. The grasping portion 71 is configured to grasp the upper end of the processing tool 6. In the present embodiment, the rotating portion 72 is provided at the upper end of the grasping portion 71.

The rotating portion 72 is configured to rotate the processing tool 6 grasped by the grasping portion 71. The rotating portion 72 extends in the up-down direction. In this example, a motor (not illustrated) is connected to the rotating portion 72. When the motor is driven, the rotating portion 72 is configured to be rotatable in the direction θz around the Z-axis. With rotation of the rotating portion 72, the processing tool 6 grasped by the grasping portion 71 rotates in the direction θz around the Z-axis. Moreover, the rotating portion 72 is configured to move in the left-right direction and the up-down direction with the aid of a first driving member (not illustrated).

As illustrated in FIG. 12, the tool magazine 64 is configured to be able to accommodate the plurality of processing tools 6. In the present embodiment, the tool magazine 64 is formed in a box form. A plurality of holes 81 for accommodating the processing tools 6 are formed in the upper surface of the tool magazine 64. The processing tool 6 is inserted into the hole 81 in a state in which an upper portion thereof is exposed. When the processing tool 6 is exchanged, the processing tool 6 grasped by the grasping portion 71 is returned to the hole 81. Moreover, the grasping portion 71 and the rotating portion 72 are moved to a position above the processing tool 6 to be used next. After that, the grasping portion 71 grasps the upper end of the processing tool 6 positioned below the grasping portion 71.

A rotation shaft 83 that rotatably supports the rotation supporting member 65 is provided in the tool magazine 64. The rotation shaft 83 extends in the left-right direction. As illustrated in FIG. 13, the rotation shaft 83 is connected to the rotation supporting member 65. Although not illustrated in the drawing, a second driving member is provided in the tool magazine 64. The rotation shaft 83 is configured to be rotatable in the direction θy around the Y-axis with the aid of the second driving member. When the rotation shaft 83 rotates in the direction θy around the Y-axis, the rotation supporting member 65 rotates in the direction θy around the Y-axis.

The rotation supporting member 65 rotatably supports the clamp 66. The rotation supporting member 65 is formed in an approximately U-shape in a plan view. The rotation supporting member 65 includes a first part 91 connected to the rotation shaft 83 so as to extend in the front-rear direction, a second part 92 extending toward the left side from the rear end of the first part 91, and a third part 93 extending toward the left side from the front end of the first part 91. The clamp 66 is rotatably supported by the second and third parts 92 and 93. A motor 95 for rotating the clamp 66 in the direction θx around the X-axis is provided in the third part 93.

The clamp 66 is a member that holds the processing target 5. For example, the clamp 66 has a shape corresponding to the shape of the adapter 8 (see FIG. 2) attached to the processing target 5. The clamp 66 has an approximately C-shape in a plan view. The clamp 66 holds the processing target 5 grasped by the conveying unit 14 of the conveying device 10. In the present embodiment, cutting processing is performed with respect to the processing target 5 held by the clamp 66.

Hereinabove, the configuration of the cutting system 100 according to the present embodiment has been described. Next, a procedure in which the conveying unit 14 takes out the processing target 5 accommodated in the accommodation portion 22 of the stocker 13 from the accommodation portion 22 in the conveying device 10 of the cutting system 100 will be described. In the present embodiment, as illustrated in FIG. 2, the adapter 8 is attached to the processing target 5 accommodated in the accommodation portion 22. As illustrated in FIG. 7, before the processing target 5 accommodated in the accommodation portion 22 is taken out by the conveying unit 14, the orientations of the first and second hooks 32 and 33 of the conveying unit 14 are the grasping orientation D11.

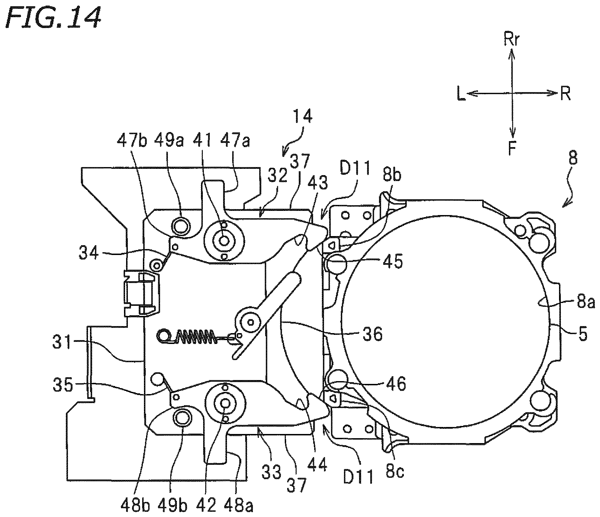

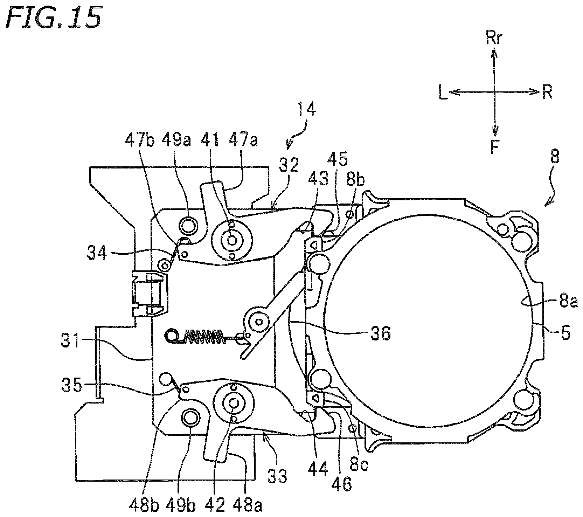

First, the controller 16 controls the motor 15a (see FIG. 10) of the moving mechanism 15 so that the conveying unit 14 is positioned on the left side of the accommodation portion 22 in which the processing target 5 to be taken from the accommodation portion 22 is accommodated. In this example, the left side of the accommodation portion 22 is a direction in which the conveying unit 14 is positioned in front of the opening 25 of the stocker body 21. After the conveying unit 14 is moved to the left side of the accommodation portion 22, as illustrated in FIG. 7, the controller 16 causes the distal end of the first hook 32 and the distal end of the second hook 33 of the conveying unit 14 to approach the processing target 5 accommodated in the accommodation portion 22. In this example, the controller 16 controls the moving mechanism 15 so that the conveying unit 14 is moved toward the right side. When the conveying unit 14 is moved toward the right side, as illustrated in FIG. 14, the first inclined surface 45 of the first hook 32 comes into contact with the first engagement projection 8b of the adapter 8 attached to the processing target 5. Moreover, the second inclined surface 46 of the second hook 33 comes into contact with the second engagement projection 8c of the adapter 8. When the conveying unit 14 is moved further toward the right side in such a state, as illustrated in FIG. 15, the distal end of the first hook 32 is pressed by the first engagement projection 8b to move in a direction (in this example, toward the rear side) opposite the second hook 33 about the first shaft 41 in a state in which the first inclined surface 45 is in contact with the first engagement projection 8b. At the same time, the distal end of the second hook 33 is pressed by the second engagement projection 8c to move in a direction (in this example, toward the front side) opposite the first hook 32 about the second shaft 42 in a state in which the second inclined surface 46 is in contact with the second engagement projection 8c.

When the conveying unit 14 is moved further toward the right side in such a state, as illustrated in FIG. 6, the first engagement projection 8b of the adapter 8 engages with the first engagement recess 43 of the distal end of the first hook 32. In this case, a state in which the distal end of the first hook 32 is pressed toward the second hook 33 by the elastic force of the first spring 34 is created. At the same time, the second engagement projection 8c of the adapter 8 engages with the second engagement recess 44 of the distal end of the second hook 33. In this case, a state in which the distal end of the second hook 33 is pressed toward the first hook 32 by the elastic force of the second spring 35 is created. In this way, the orientations of the first and second hooks 32 and 33 are the grasping orientation D11. In this case, a surface of the other end (in this example, the first base end projection 47b) of the first hook 32 on a side opposite to the second hook 33 does not make contact with the first contact projection 49a. Moreover, a surface of the base end (in this example, the second base end projection 48b) of the second hook 33 on a side opposite to the first hook 32 does not make contact with the second contact projection 49b. In this way, the first engagement projection 8b of the adapter 8 engages with the first engagement recess 43 of the first hook 32 and the second engagement projection 8c of the adapter 8 engages with the second engagement recess 44 of the second hook 33 whereby a state in which the processing target 5 is grasped by the conveying unit 14 is created. Therefore, the movement of the processing target 5 in the front-rear direction and the left-right direction relative to the conveying unit 14 is restricted. Moreover, when the processing target 5 is grasped by the conveying unit 14, a state in which the processing target 5 is disposed on the upper surface of the fixing member 36 and is fixed by the plate spring 37 provided in the conveying unit body 31 is created. Therefore, movement of the processing target 5 in the up-down direction relative to the conveying unit 14 is restricted.

Subsequently, in a state in which the processing target 5 is grasped by the conveying unit 14, the controller 16 controls the moving mechanism 15 so that the conveying unit 14 is moved in a direction away from the accommodation portion 22. In this case, the conveying unit 14 moves toward the left side in a state of grasping the processing target 5. In this way, the conveying unit 14 can detach the processing target 5 accommodated in the accommodation portion 22 from the accommodation portion 22. After the processing target 5 is detached from the accommodation portion 22, the controller 16 may control the moving mechanism 15 so that the conveying unit 14 conveys the processing target 5 to the cutting device 60.

Next, a procedure in which the processing target 5 grasped by the conveying unit 14 is accommodated in the accommodation portion 22 of the stocker 13 in the conveying device 10 will be described. As illustrated in FIG. 6, in a state in which the first and second hooks 32 and 33 of the conveying unit 14 grasp the processing target 5, the controller 16 controls the motor 15a (see FIG. 10) of the moving mechanism 15 so that the conveying unit 14 is positioned on the left side of the accommodation portion 22 that accommodates the processing target 5. After that, the controller 16 controls the moving mechanism 15 so that the conveying unit 14 is moved toward the right side in order to cause the conveying unit 14 to approach the accommodation portion 22. The conveying unit 14 moves toward the right side and the processing target 5 grasped by the conveying unit 14 is moved and positioned in the accommodation portion 22. In this way, the processing target 5 grasped by the conveying unit 14 is accommodated in the accommodation portion 22.

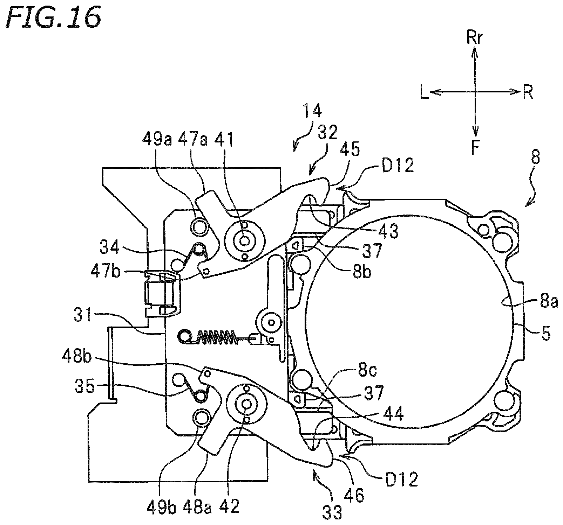

In a state in which the processing target 5 grasped by the conveying unit 14 is accommodated in the accommodation portion 22, the controller 16 controls the moving mechanism 15 so that the conveying unit 14 is moved further toward the right side. In this case, as illustrated in FIG. 16, the distal end of the first hook 32 is pressed by the first engagement projection 8b of the adapter 8 whereby the distal end of the first hook 32 is moved in the direction opposite the second hook 33. At the same time, the distal end of the second hook 33 is pressed by the second engagement projection 8c of the adapter 8 whereby the distal end of the second hook 33 is moved in the direction opposite the first hook 32. In this way, the state of engagement between the first engagement recess 43 of the first hook 32 and the first engagement projection 8b of the adapter 8 and the state of engagement between the second engagement recess 44 of the second hook 33 and the second engagement projection 8c of the adapter 8 are released. When these engagement states are released, the orientations of the first and second hooks 32 and 33 are the non-grasping orientation D12. In this case, the first contact projection 49a comes into contact with the first projection 47a of the first hook 32. The second contact projection 49b comes into contact with the second projection 48a of the second hook 33. When the orientations of the first and second hooks 32 and 33 are the non-grasping orientation D12, the elastic force of the first spring 34 is applied in such a direction that the distal end of the first hook 32 does not move. In this case, the elastic force of the second spring 35 is applied in such a direction that the distal end of the second hook 33 does not move. Therefore, in the non-grasping orientation D12, the distal end of the first hook 32 is not moved by the elastic force of the first spring 34. In the non-grasping orientation D12, the distal end of the second hook 33 is not moved by the elastic force of the second spring 35.

After the state of engagement between the first engagement recess 43 of the first hook 32 and the first engagement projection 8b of the adapter 8 and the state of engagement between the second engagement recess 44 of the second hook 33 and the second engagement projection 8c of the adapter 8 are released, the controller 16 controls the moving mechanism 15 so that the conveying unit 14 is moved away from the accommodation portion 22. In this way, the conveying unit 14 moves toward the left side. In this manner, it is possible to accommodate the processing target 5 grasped by the conveying unit 14 in the accommodation portion 22 of the stocker 13.

After the processing target 5 grasped by the conveying unit 14 is accommodated in the accommodation portion 22, the orientations of the first and second hooks 32 and 33 of the conveying unit 14 are the non-grasping orientation D12. In this case, as illustrated in FIG. 9, the controller 16 may control the moving mechanism 15 so that the conveying unit 14 is moved to the standby position P1. When the conveying unit 14 moves to the standby position P1, the first and second hooks 32 and 33 of the conveying unit 14 approach from the base end side toward the distal ends of the first and second contact members 38 and 39 provided at the standby position P1. After that, the left surface of the first projection 47a of the first hook 32 comes into contact with the distal end of the first contact member 38. In a state in which the first projection 47a and the first contact member 38 are in contact with each other, the first hook 32 moves toward the first contact member 38. At the same time, the left surface of the second projection 48a of the second hook 33 comes into contact with the distal end of the second contact member 39. In a state in which the second projection 48a and the second contact member 39 are in contact with each other, the second hook 33 moves toward the second contact member 39.

In this case, the first hook 32 is pressed toward the right side by the first contact member 38, and the second hook 33 is pressed toward the right side by the second contact member 39. In this way, as illustrated in FIG. 7, the first hook 32 rotates about the first shaft 41, whereby the orientation of the distal end of the first hook 32 is changed from the non-grasping orientation D12 to the grasping orientation D11. Moreover, the second hook 33 rotates about the second shaft 42, whereby the orientation of the second hook 33 is changed from the non-grasping orientation D12 to the grasping orientation D11.

As described above, in the present embodiment, as illustrated in FIG. 3, since the plurality of accommodation portions 22 in which the processing targets 5 are accommodated are provided in the stocker 13, it is possible to accommodate the plurality of processing targets 5 in the stocker 13. In the present embodiment, when the processing target 5 accommodated in the accommodation portion 22 of the stocker 13 is taken out, first, the controller 16 controls the moving mechanism 15 so that the conveying unit 14 is moved toward the processing target 5 accommodated in the accommodation portion 22. Moreover, as illustrated in FIG. 6, when the conveying unit 14 is moved so that the processing target 5 is positioned between the first and second hooks 32 and 33 of the conveying unit 14, the first engagement projection 8b of the adapter 8 attached to the processing target 5 engages with the first engagement recess 43 of the first hook 32 and the second engagement projection 8c of the adapter 8 engages with the second engagement recess 44 of the second hook 33. In this case, the distal end of the first hook 32 is moved toward the second hook 33 by the elastic force of the first spring 34. The distal end of the second hook 33 is moved toward the first hook 32 by the elastic force of the second spring 35. Therefore, the conveying unit 14 can grasp the processing target 5 using the elastic force of the first and second springs 34 and 35. Moreover, the conveying unit 14 moves in a state of grasping the processing target 5 whereby the processing target 5 can be taken out from the stocker 13. Therefore, it is possible to automatically take out the processing target 5 from the stocker 13 using the conveying device 10. As a result, it is possible to alleviate user's burden.

In the present embodiment, the first hook 32 is supported by the first shaft 41 so as to be rotatable relative to the first shaft 41. The second hook 33 is supported by the second shaft 42 so as to be rotatable relative to the second shaft 42. The first spring 34 applies elastic force to the first hook 32 so that the distal end of the first hook 32 rotates toward the second hook 33 when the first engagement projection 8b of the adapter 8 is positioned in the first engagement recess 43. Moreover, as illustrated in FIG. 8, the first spring 34 applies elastic force to the first hook 32 so that the distal end of the first hook 32 does not rotate when the first engagement projection 8b is not positioned in the first engagement recess 43. Moreover, as illustrated in FIG. 6, the second spring 35 applies elastic force to the second hook 33 so that the distal end of the second hook 33 rotates toward the first hook 32 when the second engagement projection 8c is positioned in the second engagement recess 44. Moreover, as illustrated in FIG. 8, the second spring 35 applies elastic force to the second hook 33 so that the distal end of the second hook 33 does not rotate when the second engagement projection 8c is not positioned in the second engagement recess 44. In this way, when the orientations of the distal ends of the first and second hooks 32 and 33 are the non-grasping orientation D12, the first hook 32 is not moved backward by the elastic force of the first spring 34 and the second hook 33 is not moved forward by the elastic force of the second spring 35. Therefore, it is possible to suppress the interval between the first and second hooks 32 and 33 from increasing excessively when the orientations of the distal ends of the first and second hooks 32 and 33 are the non-grasping orientation D12.

In the present embodiment, as illustrated in FIG. 8, when the orientation of the distal end of the first hook 32 is the non-grasping orientation D12, the first contact projection 49a comes into contact with the first projection 47a of the first hook 32. When the orientation of the distal end of the second hook 33 is the non-grasping orientation D12, the second contact projection 49b comes into contact with the second projection 48a of the second hook 33. In this way, it is possible to prevent the distal end of the first hook 32 from moving backward when the orientation of the distal end of the first hook 32 is the non-grasping orientation D12. Moreover, it is possible to prevent the distal end of the second hook 33 from moving forward when the orientation of the distal end of the second hook 33 is the non-grasping orientation D12. In the present embodiment, when the interval between the first and second hooks 32 and 33 increases excessively, it is not possible to change the orientations of the first and second hooks 32 and 33 automatically to the grasping orientation D11. According to the present embodiment, it is possible to change the orientations of the first and second hooks 32 and 33 automatically to the grasping orientation D11.

In the present embodiment, when the orientation of the distal end of the first hook 32 is the non-grasping orientation D12, as illustrated in FIG. 9, the first projection 47a of the first hook 32 is pressed toward the distal end by the first contact member 38 at the standby position P1, whereby the orientation of the first hook 32 can be changed to the grasping orientation D11. Moreover, when the orientation of the distal end of the second hook 33 is the non-grasping orientation D12, the second projection 48a of the second hook 33 is pressed toward the distal end by the second contact member 39 at the standby position P1, whereby the orientation of the second hook 33 can be changed to the grasping orientation D11. Therefore, when the conveying unit 14 moves from the standby position P1 toward the accommodation portion 22, the orientations of the first and second hooks 32 and 33 can be changed to the grasping orientation D11.

In the present embodiment, as illustrated in FIG. 7, in a state in which the orientations of the first and second hooks 32 and 33 are the grasping orientation D11, the conveying unit 14 is moved toward the processing target 5 accommodated in the accommodation portion 22. When the conveying unit 14 moves toward the accommodation portion 22, as illustrated in FIG. 14, the first inclined surface 45 of the first hook 32 comes into contact with the first engagement projection 8b of the adapter 8 attached to the processing target 5. At the same time, the second inclined surface 46 of the second hook 33 comes into contact with the second engagement projection 8c of the adapter 8. When the conveying unit 14 is moved further toward the right side in such a state, as illustrated in FIG. 15, the distal end of the first hook 32 is pressed by the first engagement projection 8b to move in a direction opposite the second hook 33 about the first shaft 41 in a state in which the first inclined surface 45 is in contact with the first engagement projection 8b. At the same time, the distal end of the second hook 33 is pressed by the second engagement projection 8c to move in a direction (in this example, toward the front side) opposite the first hook 32 about the second shaft 42 in a state in which the second inclined surface 46 is in contact with the second engagement projection 8c. When the conveying unit 14 is moved further toward the accommodation portion 22 in such a state, as illustrated in FIG. 6, the first engagement projection 8b of the adapter 8 engages with the first engagement recess 43 of the distal end of the first hook 32. At the same time, the second engagement projection 8c of the adapter 8 engages with the second engagement recess 44 of the distal end of the second hook 33. Therefore, in the present embodiment, the first inclined surface 45 performs a role of guiding the movement of the first hook 32. The second inclined surface 46 performs a role of guiding the movement of the second hook 33. Therefore, the first and second hooks 32 and 33 easily move in a grasping direction while making contact with the adapter 8 attached to the processing target 5.

In the present embodiment, the fixing member 36 extends toward the right side from the conveying unit body 31 at a position below the first and second hooks 32 and 33 and between the first and second hooks 32 and 33 in a plan view. In this way, it is possible to suppress the processing target 5 from falling from the conveying unit 14 when the processing target 5 is grasped by the first and second hooks 32 and 33.

In the present embodiment, the plate spring 37 that applies elastic force toward the processing target 5 when the processing target 5 is disposed on the upper surface of the fixing member 36 is provided in the conveying unit body 31. In this way, when the processing target 5 is grasped by the first and second hooks 32 and 33, the processing target 5 is fixed by the plate spring 37. Therefore, it is possible to prevent the processing target 5 from easily falling from the conveying unit 14.

In the present embodiment, as illustrated in FIG. 3, the stocker 13 (specifically, the stocker body 21) is connected to a surface of the lid 12 on the side of the conveying case body 11. The stocker 13 is configured to move following the movement of the lid 12. Due to this, as illustrated in FIG. 5, when the user opens the lid 12, the stocker 13 is moved toward the front side. Therefore, the user can easily load the processing target 5 into the stocker 13. Moreover, the user can easily take out the processing target 5 from the accommodation portion 22 of the stocker 13 with his or her hands.

In the present embodiment, as illustrated in FIG. 4, in a plan view, the angle R1 between the surface of the stocker body 21 facing the lid 12 and the surface (in this example, the rear surface) of the lid 12 on the side of the conveying case body 11 is 90°. In other words, in a plan view, the angle R1 between the straight line L1 on the opening end of the stocker body 21 and the straight line L2 on the rear surface of the lid 12 is 90°, for example. In this way, the stocker 13 is disposed so that the opening 25 of the stocker 13 faces the front side when the lid 12 is open so that the angle between the rear surface of the lid 12 and the opening end surface of the conveying case body 11 is 90°. Therefore, the user can easily load the processing target 5 into the stocker 13. The user can easily take out the processing target 5 from the accommodation portion 22 of the stocker 13 with his or her hands.

Hereinabove, the cutting system 100 having the conveying device 10 according to the first embodiment will be described. The conveying device according to the present invention is not limited to the conveying device 10 according to the first embodiment but can be implemented in various other embodiments. Next, other embodiments will be described briefly. In the following description, constituent elements having the same configuration as those described above will be denoted by the same symbols and the description thereof will be omitted appropriately.

### Second Embodiment

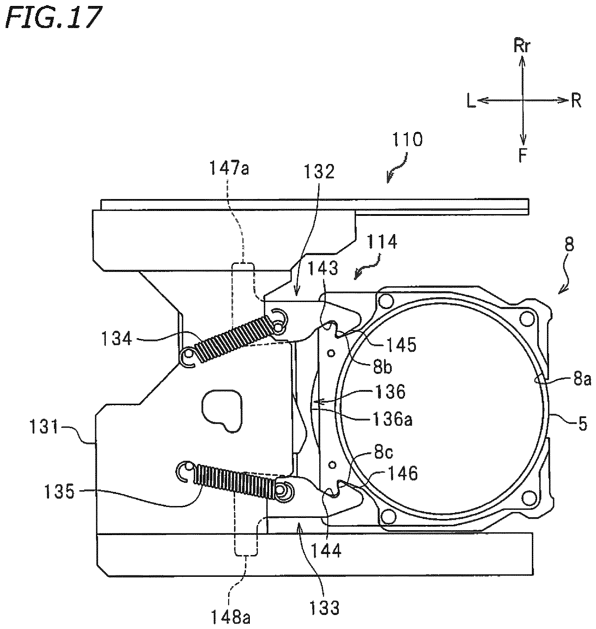

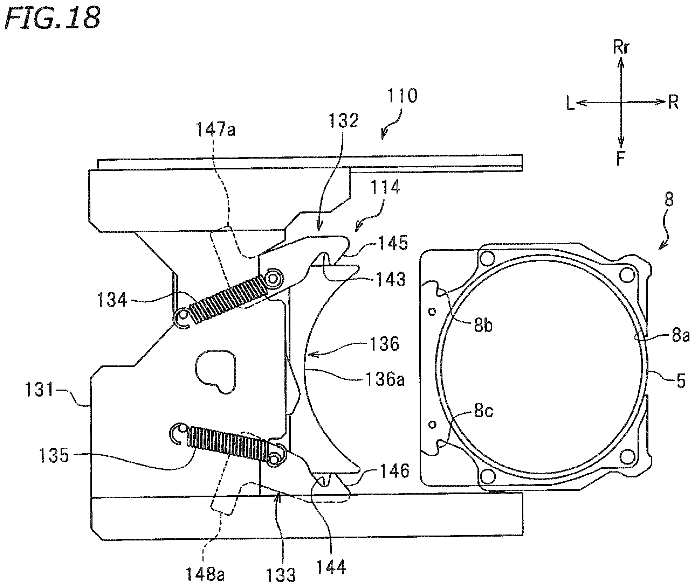

Next, a conveying device 110 according to a second embodiment will be described. FIG. 17 is a plan view of a conveying unit 114. FIG. 17 is a diagram illustrating a state in which the processing target 5 is grasped by the conveying unit 114. FIG. 18 is a plan view of the conveying unit 114. FIG. 18 is a diagram illustrating a state in which the processing target 5 is not grasped by the conveying unit 114.

In the present embodiment, similarly to the first embodiment, as illustrated in FIG. 2, the processing target 5 to which the adapter 8 is attached is accommodated in the accommodation portion 22 of the stocker 13.

As illustrated in FIG. 17, the conveying device 110 includes the conveying unit 114. As illustrated in FIG. 3, the conveying unit 114 is configured to take out the processing target 5 accommodated in the accommodation portion 22 of the stocker 13 from the accommodation portion 22. The conveying unit 114 is configured to convey the taken-out processing target 5 to the cutting device 60. Moreover, the conveying unit 114 is configured to accommodate the processing target 5 in the accommodation portion 22. The conveying unit 114 includes a conveying unit body 131, a first hook 132, a second hook 133, a first spring 134, a second spring 135, and a fixing member 136.

In the present embodiment, the conveying unit body 131 is a planar member. In this example, the motor 15a (see FIG. 10) of the moving mechanism 15 is connected to the conveying unit body 131. When the motor 15a is driven, the conveying unit 114 moves in a three-dimensional direction relative to the stocker 13. The first and second hooks 132 and 133 are members that sandwich the processing target 5 to which the adapter 8 is attached. The first and second hooks 132 and 133 are disposed to face each other in the front-rear direction. In the present embodiment, the first and second hooks 132 and 133 are provided on the lower surface of the conveying unit body 131. Although not illustrated in the drawings, a first shaft and a second shaft extending in the up-down direction are provided on the lower surface of the conveying unit body 131. The first hook 132 is provided in the first shaft. The first hook 132 can rotate about the first shaft. The second hook 133 is provided in the second shaft. The second hook 133 can rotate about the second shaft.

In the present embodiment, a first engagement recess 143 similar to the first engagement recess 43 of the first embodiment and a first inclined surface 145 similar to the first inclined surface 45 of the first embodiment are formed in the distal end of the first hook 132. Moreover, a first projection 147a similar to the first projection 47a of the first embodiment is formed on the base end of the first hook 132. A second engagement recess 144 similar to the second engagement recess 44 of the first embodiment and a second inclined surface 146 similar to the second inclined surface 46 of the first embodiment are formed in the distal end of the second hook 133. Moreover, a second projection 148a similar to the first projection 48a of the first embodiment is formed on the base end of the second hook 133. In this example, a projection similar to the first base end projection 47b of the first embodiment is omitted from the first hook 132. A projection similar to the second base end projection 48b of the first embodiment is omitted from the second hook 133.

The first spring 134 is configured to apply elastic force to the first hook 132. As illustrated in FIG. 17, the first spring 134 applies elastic force in such a direction that the distal end of the first hook 132 moves toward the second hook 133 when the first engagement projection 8b of the adapter 8 is positioned in the first engagement recess 143 of the first hook 132. Moreover, as illustrated in FIG. 18, the first spring 134 applies elastic force to the first hook 132 so that the distal end of the first hook 132 does not move when the first engagement projection 8b of the adapter 8 is not positioned in the first engagement recess 143. The first spring 134 is provided on the upper surface of the conveying unit body 131. In the present embodiment, the first spring 134 is a coil spring. One end of the first spring 134 is connected to the upper surface of the conveying unit body 131. The other end of the first spring 134 is connected to a portion of the first hook 132 located closer to the right side than the portion to which the first shaft is connected.

The second spring 135 is configured to apply elastic force to the second hook 133. As illustrated in FIG. 17, the second spring 135 applies elastic force in such a direction that the distal end of the second hook 133 moves toward the first hook 132 when the second engagement projection 8c of the adapter 8 is positioned in the second engagement recess 144 of the second hook 133. Moreover, as illustrated in FIG. 18, the second spring 135 applies elastic force to the second hook 133 so that the distal end of the second hook 133 does not move when the second engagement projection 8c of the adapter 8 is not positioned in the second engagement recess 144. The second spring 135 is provided on the upper surface of the conveying unit body 131 located closer to the front side than the first spring 134. In the present embodiment, the second spring 135 is a coil spring similarly to the first spring 134. One end of the second spring 135 is connected to the upper surface of the conveying unit body 131. The other end of the second spring 135 is connected to a portion of the second hook 133 located closer to the right side than the portion to which the second shaft is connected.

The fixing member 136 is a member for suppressing falling of the processing target 5 when the processing target 5 is grasped by the first and second hooks 132 and 133 of the conveying unit 114. In the present embodiment, the fixing member 136 includes a first fixing member 136a extending toward the right side from the lower surface of the conveying unit body 131 and a second fixing member (not illustrated) disposed above the first fixing member 136a to extend toward the right side from the conveying unit body 131. The first fixing member 136a and the second fixing member are planar members. The first and second hooks 132 and 133 are disposed between the first fixing member 136a and the second fixing member. In a state in which the processing target 5 is grasped by the first and second hooks 132 and 133, the processing target 5 is positioned between the first fixing member 136a and the second fixing member.

Hereinabove, the configuration of the conveying unit 114 according to the present embodiment has been described. The conveying unit 114 can take out the processing target 5 accommodated in the accommodation portion 22 by the controller 16 controlling the moving mechanism 15 by a procedure similar to the procedure in which the conveying unit 14 of the first embodiment takes out the processing target 5 accommodated in the accommodation portion 22 (see FIG. 3) of the stocker 13. Moreover, in the present embodiment, the conveying unit 114 can accommodate the processing target 5 grasped by the conveying unit 114 in the accommodation portion 22 by the controller 16 controlling the moving mechanism 15 by a procedure similar to the procedure in which the conveying unit 14 of the first embodiment accommodates the grasped processing target 5 in the accommodation portion 22. The conveying unit 114 according to the present embodiment provides effects similar to those of the conveying unit 14 according to the first embodiment.

## Claims

1. A processing target conveying device comprising:
a stocker (13) which is configured to accommodate a plurality of processing targets (5);
a conveying unit (14) that is configured to take out one of the processing targets (5), which are accommodated in the stocker (13), from the stocker (13);
a moving mechanism (15) that is configured to move the conveying unit (14) in a three-dimensional direction relative to the stocker (13); and
a controller (16) that is configured to control the moving mechanism (15), wherein
an adapter (8) having a first engagement projection (8b) formed at one end in a first direction and a second engagement projection (8c) formed at the other end on a side opposite to the one end is configured to be attached to the processing target (5), and
the conveying unit (14) includes:
a conveying unit body (31);
a first hook (32) which extends in a second direction orthogonal to the first direction from the conveying unit body (31) and in which a first engagement recess (43) configured to engage with the first engagement projection (8b) is formed at a distal end thereof;
a second hook (33) which, at a position facing the first hook (32) in the first direction, extends in the second direction from the conveying unit body (31) and in which a second engagement recess (44) configured to engage with the second engagement projection (8c) is formed at a distal end thereof;
a first spring (34) that is configured to apply elastic force to the first hook (32) so that the distal end of the first hook (32) moves toward the second hook (33) when the first engagement projection (8b) is positioned in the first engagement recess (43); and
a second spring (35) that is configured to apply elastic force to the second hook (33) so that the distal end of the second hook (33) moves toward the first hook (32) when the second engagement projection (8c) is positioned in the second engagement recess (44).

2. The processing target conveying device according to claim 1, wherein
the conveying unit (14) includes:
a first shaft (41) provided in the conveying unit body (31); and
a second shaft (42) provided in the conveying unit body (31) at a position facing the first shaft (41) in the first direction,
the first hook (32) is supported by the first shaft (41) so as to be rotatable relative to the first shaft (41),
the second hook (33) is supported by the second shaft (42) so as to be rotatable relative to the second shaft (42),
the first spring (34) is configured to apply elastic force to the first hook (32) so that the distal end of the first hook (32) rotates toward the second hook (33) when the first engagement projection (8b) is positioned in the first engagement recess (43) and to apply elastic force to the first hook (32) so that the distal end of the first hook (32) does not rotate when the first engagement projection (8b) is not positioned in the first engagement recess (43), and
the second spring (35) is configured to apply elastic force to the second hook (33) so that the distal end of the second hook (33) rotates toward the first hook (32) when the second engagement projection (8c) is positioned in the second engagement recess (44) and to appy elastic force to the second hook (33) so that the distal end of the second hook (33) does not rotate when the second engagement projection (8c) is not positioned in the second engagement recess (44).

3. The processing target conveying device according to claim 2, wherein
a first projection (47a) extending toward a side opposite to the second hook (33) is formed on a base end of the first hook (32),
a second projection (48a) extending toward a side opposite to the first hook (32) is formed on a base end of the second hook (33), and
a standby position (P1), at which the conveying unit (14) stands by, is set in advance,
the processing target conveying device further comprising:
a first contact member (38) that is configured to come into contact with the first projection (47a) and to press the first projection (47a) toward the distal end of the first hook (32) when the conveying unit (14) moves to the standby position (P1); and
a second contact member (39) that is configured to come into contact with the second projection (48a) and to press the second projection (48a) toward the distal end of the second hook (33) when the conveying unit (14) moves to the standby position (P1).

4. The processing target conveying device according to claim 2 or 3, wherein
a first projection (47a) extending toward a side opposite to the second hook (33) is formed on a base end of the first hook (32), and
a second projection (48a) extending toward a side opposite to the first hook (32) is formed on a base end of the second hook (33),
the processing target conveying device further comprising:
in a case where an orientation of the distal end of the first hook (32) when the first engagement recess (43) of the first hook (32) is not engaged with the first engagement projection (8b) and an orientation of the distal end of the second hook (33) when the second engagement recess (44) of the second hook (33) is not engaged with the second engagement projection (8c) are a non-grasping orientation (D12),
a first contact projection (49a) provided, in the conveying unit body (31), in a portion located closer to a side opposite to the second hook (33) than the first shaft (41) to make contact with the first projection (47a) when the orientation of the distal end of the first hook (32) is the non-grasping orientation (D12); and
a second contact projection (49b) provided, in the conveying unit body (31), in a portion located closer to a side opposite to the first hook (32) than the second shaft (42) to make contact with the second projection (48a) when the orientation of the distal end of the second hook (33) is the non-grasping orientation (D12).

5. The processing target conveying device according to any one of claims 1 to 4, wherein
a first inclined surface (45) is formed in a portion of a surface of the first hook (32) at an distal end thereof on the second hook (33) side, the portion being closer to the distal end than the first engagement recess (43), and the first inclined surface (45) being inclined to a side opposite to the second hook (33) toward the distal end and being configured to make contact with the first engagement projection (8b), and
a second inclined surface (46) is formed in a portion of a surface of the second hook (33) at a distal end thereof on the first hook (32) side, the portion being closer to the distal end than the second engagement recess (44), and second inclined surface (46) being inclined to a side opposite to the first hook (32) toward the distal end and being configured to make contact with the second engagement projection (8c).

6. The processing target conveying device according to any one of claims 1 to 5, further comprising:
a fixing member (36) extending in the second direction from the conveying unit body (31) at a position below the first hook (32) and the second hook (33) and between the first hook (32) and the second hook (33) in a plan view.

7. The processing target conveying device according to claim 6, wherein
a plate spring (37) that is configured to apply elastic force to the processing target (5) when the processing target (5) is disposed on an upper surface of the fixing member (36) is provided in the conveying unit body (31).

8. The processing target conveying device according to any one of claims 1 to 7, further comprising:
a main body (11) which has an inner space and in which an opening is formed in a portion thereof; and
a lid (12) provided in the main body (11) so as to open and close the opening of the main body (11), wherein
the stocker (13) is connected to a surface of the lid (12) on a side of the main body (11).

9. The processing target conveying device according to claim 8, wherein
the stocker (13) is configured to move following movement of the lid (12).

10. The processing target conveying device according to claim 9, wherein
the stocker (13) includes:
a stocker body (21) which has an inner space and in which an opening is formed in a portion of a side surface thereof; and
an accommodation portion (22) disposed in the inner space of the stocker body (21) and capable of accommodating the processing target (5), wherein
the stocker body (21) is connected to a surface of the lid (12) on the side of the main body (11), and
in a plan view, an angle between a surface of the stocker body (21) facing the lid (12) and a surface of the lid (12) on the side of the main body (11) is 90°.

11. The processing target conveying device according to claim 10, further comprising:
a connecting member (26) that is configured to connect the stocker body (21) and the lid (12).

12. The processing target conveying device according to claim 10 or 11, wherein a plurality of accommodation portions (22) are provided in an up-down direction.

13. A cutting system comprising:
the processing target conveying device (10) according to any one of claims 1 to 12; and
a cutting device (60) that is configured to cut the processing target (5).

14. The cutting system according to claim 13, wherein
the cutting device (60) includes:
a clamp (66) that is configured to hold the processing target (5); and
a cutting portion (63) that is configured to cut the processing target (5) held by the clamp (66).

## Patentansprüche

1. Verarbeitungsziel-Transportvorrichtung, umfassend:
eine Lagervorrichtung (13), die konfiguriert ist, mehrere Verarbeitungsziele (5) aufzunehmen;
eine Transporteinheit (14), die konfiguriert ist, eines der Verarbeitungsziele (5), die in der Lagervorrichtung (13) aufgenommen sind, aus der Lagervorrichtung (13) herauszunehmen;
einen Bewegungsmechanismus (15), der konfiguriert ist, die Transporteinheit (14) in einer dreidimensionalen Richtung relativ zu der Lagervorrichtung (13) zu bewegen; und
eine Steuerung (16), die dazu konfiguriert ist, den Bewegungsmechanismus (15) zu steuern, wobei
ein Adapter (8), der einen ersten Eingriffsvorsprung (8b) aufweist, der an einem Ende in einer ersten Richtung ausgebildet ist, und einen zweiten Eingriffsvorsprung (8c), der an dem anderen Ende an einer dem einen Ende gegenüberliegenden Seite ausgebildet ist, so konfiguriert ist, dass er an dem Verarbeitungsziel (5) befestigt werden kann, und
die Transporteinheit (14) umfasst:
einen Transporteinheitskörper (31);
einen ersten Haken (32), der sich in einer zweiten Richtung orthogonal zu der ersten Richtung von dem Transporteinheitskörper (31) erstreckt, und in dem eine erste Eingriffsausnehmung (43) an einem distalen Ende davon ausgebildet ist, die zum Eingriff mit dem ersten Eingriffsvorsprung (8b) konfiguriert ist;
einen zweiten Haken (33), der sich an einer Position, die dem ersten Haken (32) in der ersten Richtung zugewandt ist, in der zweiten Richtung von dem Transporteinheitskörper (31) erstreckt und in der eine zweite Eingriffsausnehmung (44) an einem distalen Ende davon ausgebildet ist, die zum Eingriff mit dem zweiten Eingriffsvorsprung (8c) konfiguriert ist;
eine erste Feder (34), die konfiguriert ist, eine elastische Kraft auf den ersten Haken (32) aufzubringen, so dass sich das distale Ende des ersten Hakens (32) in Richtung des zweiten Hakens (33) bewegt, wenn der erste Eingriffsvorsprung (8b) in der ersten Eingriffsausnehmung (43) positioniert ist; und
eine zweite Feder (35), die konfiguriert ist, eine elastische Kraft auf den zweiten Haken (33) aufzubringen, so dass sich das distale Ende des zweiten Hakens (33) in Richtung des ersten Hakens (32) bewegt, wenn der zweite Eingriffsvorsprung (8c) in der zweiten Eingriffsausnehmung (44) positioniert ist.

2. Die Verarbeitungsziel-Transportvorrichtung gemäß Anspruch 1, wobei
die Transporteinheit (14) umfasst:
eine erste Welle (41), die in dem Transporteinheitskörper (31) bereitgestellt ist; und
eine zweite Welle (42), die in dem Transporteinheitskörper (31) an einer Position bereitgestellt ist, die der ersten Welle (41) in der ersten Richtung zugewandt ist,
der erste Haken (32) von der ersten Welle (41) so gelagert wird, dass er relativ zu der ersten Welle (41) drehbar ist,
der zweite Haken (33) von der zweiten Welle (42) so gelagert wird, dass er relativ zu der zweiten Welle (42) drehbar ist,
die erste Feder (34) konfiguriert ist, eine elastische Kraft auf den ersten Haken (32) aufzubringen, so dass das distale Ende des ersten Hakens (32) in Richtung des zweiten Hakens (33) dreht, wenn der erste Eingriffsvorsprung (8b) in der ersten Eingriffsausnehmung (43) angeordnet ist und eine elastische Kraft auf den ersten Haken (32) auszuführen, so dass das distale Ende des ersten Hakens (32) nicht dreht, wenn der erste Eingriffsvorsprung (8b) nicht in der ersten Eingriffsausnehmung (43) angeordnet ist, und
die zweite Feder (35) konfiguriert ist, eine elastische Kraft auf den zweiten Haken (33) aufzubringen, so dass das distale Ende des zweiten Hakens (33) in Richtung des ersten Hakens (32) dreht, wenn der zweite Eingriffsvorsprung (8c) in der zweiten Eingriffsausnehmung (44) angeordnet ist und eine elastische Kraft auf den zweiten Haken (33) aufzubringen, so dass das distale Ende des zweiten Hakens (33) nicht dreht, wenn der zweite Eingriffsvorsprung (8c) nicht in der zweiten Eingriffsausnehmung (44) angeordnet ist.

3. Die Verarbeitungsziel-Transportvorrichtung gemäß Anspruch 2, wobei
ein erster Vorsprung (47a), der sich in Richtung einer dem zweiten Haken (33) gegenüberliegenden Seite erstreckt, an einem Basisende des ersten Hakens (32) ausgebildet ist,
ein zweiter Vorsprung (48a), der sich in Richtung einer dem ersten Haken (32) gegenüberliegenden Seite erstreckt, an einem Basisende des zweiten Hakens (33) ausgebildet ist, und
eine Bereitschaftsstellung (P1), bei der die Transporteinheit (14) bereitsteht, im Vorhinein festgelegt ist,
wobei die Verarbeitungsziel-Transportvorrichtung ferner umfasst:
ein erstes Kontaktelement (38), das konfiguriert ist, in Kontakt mit dem ersten Vorsprung (47a) zu kommen und den ersten Vorsprung (47a) in Richtung des distalen Endes des ersten Hakens (32) zu drücken, wenn sich die Transporteinheit (14) zu der Bereitschaftsstellung (P1) bewegt; und
ein zweites Kontaktelement (39), das konfiguriert ist, in Kontakt mit dem zweiten Vorsprung (48a) zu kommen und den zweiten Vorsprung (48a) in Richtung des distalen Endes des zweiten Hakens (33) zu drücken, wenn sich die Transporteinheit (14) zu der Bereitschaftsstellung (P1) bewegt.

4. Die Verarbeitungsziel-Transportvorrichtung gemäß Anspruch 2 oder 3, wobei
ein erster Vorsprung (47a), der sich in Richtung einer dem zweiten Haken (33) gegenüberliegenden Seite erstreckt, an einem Basisende des ersten Hakens (32) ausgebildet ist, und
ein zweiter Vorsprung (48a), der sich in Richtung einer dem ersten Haken (32) gegenüberliegenden Seite erstreckt, an einem Basisende des zweiten Hakens (33) ausgebildet ist,
wobei die Verarbeitungsziel-Transportvorrichtung ferner umfasst:
in einem Fall, in welchem eine Orientierung des distalen Endes des ersten Hakens (32), wenn die erste Eingriffsausnehmung (43) des ersten Hakens (32) nicht in Eingriff mit dem ersten Eingriffsvorsprung (8b) steht und eine Orientierung des distalen Endes des zweiten Hakens (33), wenn die zweite Eingriffsausnehmung (44) des zweiten Hakens (33) nicht in Eingriff mit dem zweiten Eingriffsvorsprung (8c) steht, eine nicht-greifende Orientierung (D12) ist,
einen ersten Kontaktvorsprung (49a), der in dem Transporteinheitskörper (31) in einem Abschnitt bereitgestellt ist, der näher an einer dem zweiten Haken (33) gegenüberliegenden Seite angeordnet ist als die erste Welle (41), um den ersten Vorsprung (47a) zu kontaktieren, wenn die Orientierung des distalen Endes des zweiten Hakens (33) die nicht-greifende Orientierung (D12) ist.

5. Die Verarbeitungsziel-Transportvorrichtung gemäß einem der Ansprüche 1 bis 4, wobei
eine erste geneigte Fläche (45) in einem Abschnitt einer Fläche des ersten Hakens (32) an einem distalen Ende davon an der zweiter-Haken-(33)-Seite ausgebildet ist, wobei sich der Abschnitt näher an dem distalen Ende als die erste Eingriffsausnehmung (43) befindet, und die erste geneigte Fläche (45) zu einer dem zweiten Haken (33) gegenüberliegenden Seite in Richtung des distalen Endes geneigt ist und konfiguriert ist, den ersten Eingriffsvorsprung (8b) zu kontaktieren, und
eine zweite geneigte Fläche (46) in einem Abschnitt einer Fläche des zweiten Hakens (33) an einem distalen Ende davon an der erster-Haken-(32)-Seite ausgebildet ist, wobei sich der Abschnitt näher an dem distalen Ende als die zweite Eingriffsausnehmung (44) befindet und die zweite geneigte Fläche (46) zu einer dem ersten Haken (33) gegenüberliegenden Seite in Richtung des distalen Endes geneigt ist und konfiguriert ist, den zweiten Eingriffsvorsprung (8c) zu kontaktieren.

6. Die Verarbeitungsziel-Transportvorrichtung gemäß einem der Ansprüche 1 bis 5, ferner umfassend:
ein Befestigungselement (36), das sich in der zweiten Richtung von dem Transporteinheitskörper (31) an einer Position unter dem ersten Haken (32) und dem zweiten Haken (33) und zwischen dem ersten Haken (32) und dem zweiten Haken (33) in einer Draufsicht erstreckt.

7. Die Verarbeitungsziel-Transportvorrichtung gemäß Anspruch 6, wobei
eine Tellerfeder (37) in dem Transporteinheitskörper (31) bereitgestellt ist, die konfiguriert ist, eine elastische Kraft auf das Verarbeitungsziel (5) aufzubringen, wenn das Verarbeitungsziel (5) auf einer oberen Fläche des Befestigungselements (36) angeordnet ist.

8. Die Verarbeitungsziel-Transportvorrichtung gemäß einem der Ansprüche 1 bis 7, ferner umfassend:
einen Hauptkörper (11), der einen Innenraum aufweist und in welchem eine Öffnung in einem Teil davon ausgebildet ist; und
einen Deckel (12), der in dem Hauptkörper (11) so bereitgestellt ist, dass er die Öffnung des Hauptkörpers (11) öffnet und schließt, wobei
die Lagervorrichtung (13) mit einer Fläche des Deckels (12) an einer Seite des Hauptkörpers (11) verbunden ist.

9. Die Verarbeitungsziel-Transportvorrichtung gemäß Anspruch 8, wobei
die Lagervorrichtung (13) konfiguriert ist, sich der Bewegung des Deckels (12) folgend zu bewegen.

10. Die Verarbeitungsziel-Transportvorrichtung gemäß Anspruch 9, wobei die Lagervorrichtung (13) umfasst:
einen Lagervorrichtungskörper (91), der einen Innenraum aufweist und in welchem eine Öffnung in einem Teil einer Seitenfläche davon ausgebildet ist; und
einen Aufnahmeteil (22), der in dem Innenraum des Lagervorrichtungskörpers (21) angeordnet ist und in der Lage ist, das Verarbeitungsziel (5) aufzunehmen, wobei
der Lagervorrichtungskörper (21) mit einer Fläche des Deckels (12) an der Seite des Hauptkörpers (11) verbunden ist, und
in einer Draufsicht ein Winkel zwischen einer dem Deckel (12) zugewandten Fläche des Lagervorrichtungskörpers (21) und einer Fläche des Deckels (12) an der Seite des Hauptkörpers (11) 90° beträgt.

11. Die Verarbeitungsziel-Transportvorrichtung gemäß Anspruch 10, ferner umfassend:
ein Verbindungselement (26), das konfiguriert ist, den Lagervorrichtungskörper (21) und den Deckel (12) zu verbinden.

12. Die Verarbeitungsziel-Transportvorrichtung gemäß Anspruch 10 oder 11, wobei eine Vielzahl von Aufnahmeteilen (22) in einer auf-ab-Richtung bereitgestellt sind.

13. Schneidsystem, umfassend:
die Verarbeitungsziel-Transportvorrichtung (10) gemäß einem der Ansprüche 1 bis 12; und
eine Schneidvorrichtung (60), die konfiguriert ist, das Verarbeitungsziel (5) zu schneiden.

14. Das Schneidsystem gemäß Anspruch 13, wobei
die Schneidvorrichtung (60) umfasst:
eine Klemme (66), die konfiguriert ist, das Verarbeitungsziel (5) zu halten; und
einen Schneidabschnitt (63), der konfiguriert ist, das von der Klemme (66) gehaltene Verarbeitungsziel (5) zu schneiden.

## Revendications

1. Dispositif de convoyage de cible de traitement, comprenant :
un chargeur (13) configuré pour recevoir une pluralité de cibles de traitement (5) ;
une unité de convoyage (14) configurée pour extraire du chargeur (13) l'une des cibles de traitement (5), qui sont reçues dans le chargeur (13) ;
un mécanisme de déplacement (15) configuré pour déplacer l'unité de convoyage (14) en direction tridimensionnelle par rapport au chargeur (13) ; et
un contrôleur (16) configuré pour contrôler le mécanisme de déplacement (15), dans lequel
un adaptateur (8), comportant une première projection d'engagement (8b) formée à une extrémité dans une première direction et une deuxième projection d'engagement (8c) formée à l'autre extrémité sur un côté opposé à ladite extrémité, est configuré pour être attaché à la cible de traitement (5), et
l'unité de convoyage (14) comprend :
un corps d'unité de convoyage (31) ;
un premier crochet (32) qui s'étend dans une deuxième direction orthogonale à la première direction depuis le corps d'unité de convoyage (31) et dans lequel un premier logement d'engagement (43) configuré pour s'engager avec la première projection d'engagement (8b) est formé à son extrémité distale ;
un deuxième crochet (33) qui, à une position qui fait face au premier crochet (32) dans la première direction, s'étend dans la deuxième direction depuis le corps d'unité de convoyage (31) et dans lequel un deuxième logement d'engagement (44) configuré pour s'engager avec la deuxième projection d'engagement (8c) est formé à son extrémité distale ;
un premier ressort (34) configuré pour appliquer une force élastique au premier crochet (32) de telle sorte que l'extrémité distale du premier crochet (32) se déplace vers le deuxième crochet (33) quand la première projection d'engagement (8b) est positionnée dans le premier logement d'engagement (43) ; et
un deuxième ressort (35) configuré pour appliquer une force élastique au deuxième crochet (33) de telle sorte que l'extrémité distale du deuxième crochet (33) se déplace vers le premier crochet (32) quand la deuxième projection d'engagement (8c) est positionnée dans le deuxième logement d'engagement (44).

2. Dispositif de convoyage de cible de traitement selon la revendication 1, dans lequel
l'unité de convoyage (14) comprend :
un premier axe (41) pourvu dans le corps d'unité de convoyage (31) ; et
un deuxième axe (42) pourvu dans le corps d'unité de convoyage (31) à une position qui fait face au premier axe (41) dans la première direction,
le premier crochet (32) est supporté par le premier axe (41) de manière à pouvoir tourner par rapport au premier axe (41),
le deuxième crochet (33) est supporté par le deuxième axe (42) de manière à pouvoir tourner par rapport au deuxième axe (42),
le premier ressort (34) est configuré pour appliquer une force élastique au premier crochet (32) de telle sorte que l'extrémité distale du premier crochet (32) tourne vers le deuxième crochet (33) quand la première projection d'engagement (8b) est positionnée dans le premier logement d'engagement (43) et pour appliquer une force élastique au premier crochet (32) de telle sorte que l'extrémité distale du premier crochet (32) ne tourne pas quand la première projection d'engagement (8b) n'est pas positionnée dans le premier logement d'engagement (43), et
le deuxième ressort (35) est configuré pour appliquer une force élastique au deuxième crochet (33) de telle sorte que l'extrémité distale du deuxième crochet (33) tourne vers le premier crochet (32) quand la deuxième projection d'engagement (8c) est positionnée dans le deuxième logement d'engagement (44) et pour appliquer une force élastique au deuxième crochet (33) de telle sorte que l'extrémité distale du deuxième crochet (33) ne tourne pas quand la deuxième projection d'engagement (8c) n'est pas positionnée dans le deuxième logement d'engagement (44).

3. Dispositif de convoyage de cible de traitement selon la revendication 2, dans lequel
une première projection (47a) qui s'étend vers un côté opposé au deuxième crochet (33) est formée sur une extrémité de base du premier crochet (32),
une deuxième projection (48a) qui s'étend vers un côté opposé au premier crochet (32) est formée sur une extrémité de base du deuxième crochet (33), et
une position d'attente (P1), où l'unité de convoyage (14) reste en attente, est établie à l'avance,
le dispositif de convoyage de cible de traitement comprenant en outre :
un premier élément de contact (38) configuré pour entrer en contact avec la première projection (47a) et pour pousser la première projection (47a) vers l'extrémité distale du premier crochet (32) quand l'unité de convoyage (14) se déplace vers la position d'attente (P1) ; et
un deuxième élément de contact (39) configuré pour entrer en contact avec la deuxième projection (48a) et pour pousser la deuxième projection (48a) vers l'extrémité distale du deuxième crochet (33) quand l'unité de convoyage (14) se déplace vers la position d'attente (P1).

4. Dispositif de convoyage de cible de traitement selon la revendication 2 ou 3, dans lequel
une première projection (47a) qui s'étend vers un côté opposé au deuxième crochet (33) est formée sur une extrémité de base du premier crochet (32), et
une deuxième projection (48a) qui s'étend vers un côté opposé au premier crochet (32) est formée sur une extrémité de base du deuxième crochet (33),
le dispositif de convoyage de cible de traitement comprenant en outre :
dans le cas où l'orientation de l'extrémité distale du premier crochet (32), quand le premier logement d'engagement (43) du premier crochet (32) n'est pas engagé avec la première projection d'engagement (8b), et l'orientation de l'extrémité distale du deuxième crochet (33), quand le deuxième logement d'engagement (44) du deuxième crochet (33) n'est pas engagé avec la deuxième projection d'engagement (8c), sont une orientation de non-prise (D12),
une première projection de contact (49a) pourvue dans le corps d'unité de convoyage (31), dans une portion située plus près d'un côté opposé au deuxième crochet (33) que le premier axe (41), pour entrer en contact avec la première projection (47a) quand l'orientation de l'extrémité distale du premier crochet (32) est l'orientation de non-prise (D12) ; et
une deuxième projection de contact (49b) pourvue dans le corps d'unité de convoyage (31), dans une portion située plus près d'un côté opposé au premier crochet (32) que le deuxième axe (42), pour entrer en contact avec la deuxième projection (48a) quand l'orientation de l'extrémité distale du deuxième crochet (33) est l'orientation de non-prise (D12) .

5. Dispositif de convoyage de cible de traitement selon l'une quelconque des revendications 1 à 4, dans lequel
une première surface inclinée (45) est formée dans une portion de surface du premier crochet (32) à son extrémité distale, du côté du deuxième crochet (33), la portion étant plus proche de l'extrémité distale que le premier logement d'engagement (43), et la première surface inclinée (45) étant inclinée vers un côté opposé au deuxième crochet (33) vers l'extrémité distale et étant configurée pour entrer en contact avec la première projection d'engagement (8b), et
une deuxième surface inclinée (46) est formée dans une portion de surface du deuxième crochet (33) à son extrémité distale, du côté du premier crochet (32), la portion étant plus proche de l'extrémité distale que le deuxième logement d'engagement (44), et la deuxième surface inclinée (46) étant inclinée vers un côté opposé au premier crochet (32) vers l'extrémité distale et étant configurée pour entrer en contact avec la deuxième projection d'engagement (8c).

6. Dispositif de convoyage de cible de traitement selon l'une quelconque des revendications 1 à 5, comprenant en outre :
un élément de fixation (36) qui s'étend dans la deuxième direction depuis le corps d'unité de convoyage (31), dans une position qui se trouve en dessous du premier crochet (32) et du deuxième crochet (33) et entre le premier crochet (32) et le deuxième crochet (33) dans une vue en plan.

7. Dispositif de convoyage de cible de traitement selon la revendication 6, dans lequel
un ressort à plaque (37) configuré pour appliquer une force élastique à la cible de traitement (5), quand la cible de traitement (5) est disposée sur une surface supérieure de l'élément de fixation (36), est pourvu dans le corps d'unité de convoyage (31).

8. Dispositif de convoyage de cible de traitement selon l'une quelconque des revendications 1 à 7, comprenant en outre :
un corps principal (11) qui comporte un espace interne et dans une portion duquel est formée une ouverture ; et
un couvercle (12) pourvu dans le corps principal (11) de manière à ouvrir et fermer l'ouverture du corps principal (11), dans lequel
le chargeur (13) est connecté à une surface du couvercle (12) du côté du corps principal (11).

9. Dispositif de convoyage de cible de traitement selon la revendication 8, dans lequel le chargeur (13) est configuré pour se déplacer en suivant le déplacement du couvercle (12).

10. Dispositif de convoyage de cible de traitement selon la revendication 9, dans lequel le chargeur (13) comprend :
un corps de chargeur (21) qui comporte un espace interne et dans une portion de surface latérale duquel est formée une ouverture ; et
une portion de logement (22) disposée dans l'espace interne du corps de chargeur (21) et capable de recevoir la cible de traitement (5),
dans lequel le corps de chargeur (21) est connecté à une surface du couvercle (12) du côté du corps principal (11), et
dans une vue en plan, l'angle entre une surface du corps de chargeur (21) qui fait face au couvercle (12) et une surface du couvercle (12) du côté du corps principal (11) est de 90°.

11. Dispositif de convoyage de cible de traitement selon la revendication 10, comprenant en outre :
un élément de connexion (26) configuré pour connecter le corps de chargeur (21) et le couvercle (12).

12. Dispositif de convoyage de cible de traitement selon la revendication 10 ou 11, dans lequel
les portions d'une pluralité de portions de logement (22) sont pourvues en direction haut-bas.

13. Système de coupe comprenant :
le dispositif de convoyage de cible de traitement (10) selon l'une quelconque des revendications 1 à 12 ; et
un dispositif de coupe (60) configuré pour couper la cible de traitement (5).

14. Système de coupe selon la revendication 13, dans lequel
le dispositif de coupe (60) comprend :
une pince (66) configurée pour maintenir la cible de traitement (5) ; et
une portion de coupe (63) configurée pour couper la cible de traitement (5) maintenue par la pince (66).
